# EUROPEAN PATENT APPLICATION

(11) **EP 1 676 906 A1**
(43) Date of publication of application: **05.07.2006**
(21) Application number: 04787918.4
(22) Date of filing: 21.09.2004
(51) Int. Cl.: C12M 1/00, G01N 33/50

(54) **NUCLEIC ACID SEPARATION PURIFICATION CARTRIDGE AND PROCESS FOR PRODUCING THE SAME**

(30) Priority: 21.10.2003 JP 2003361019; 21.10.2003 JP 2003360550; 21.10.2003 JP 2003361183; 26.02.2004 JP 2004051811
(71) Applicant: FUJI PHOTO FILM CO., LTD., Minamiashigara-shi, Kanagawa-ken 250-0193 (JP)
(72) Inventor: SHIGESADA, Keiji, c/o FUJI PHOTO FILM CO., LTD., Odawara-shi, Kanagawa 250-0001 (JP); FUJIWARA, Morio, c/o FUJI PHOTO FILM CO., LTD., Odawara-shi, Kanagawa 250-0001 (JP); MORI, Toshihiro, c/o FUJI PHOTO FILM CO., LTD., Asaka-shi, Saitama 3510024 (JP)
(74) Representative: Grünecker, Kinkeldey, Stockmair & Schwanhäusser Anwaltssozietät
(86) International application number: PCT/JP2004/013735
(87) International publication number: WO 2005/037983

(57) **Abstract**

A cartridge for nucleic acid separation and purification and a method for producing the cartridge are provided which does not require a special facility for adhering containers and can produce a number of cartridges at the same time. Also is provided a cartridge for nucleic acid separation and purification in which a washing liquid is prevented from remaining in the container during washing step of nucleic acid separation and purification, and liquids is prevented from attaching to an outer wall surface of a discharge part. Specifically, a cartridge for nucleic acid separation and purification (100) iscomposedof: an insert member (110) including a bottom member (120) and a nucleic acid-adsorptive porous membrane (F); and a barrel (140) which is formed by insert injection molding with the insert member (110). A rib (226) of the cartridge for nucleic acid separation and purification (200) slopes down to the discharge part (224) in a direction from an outer side end part (226a) to an inner side end part (226b). A thickness (T) at an end face (324), which is a part forming the second opening (321) of the cap (320) of the cartridge for nucleic acid separation and purification (300), is made 0.2 mm or more.

## Description

### Field of the invention

The present invention relates to a cartridge for nucleic acid separation. Particularly, the present invention relates to a cartridge for nucleic acid separation and purification having a cylindrical body with a first opening and a second opening and having a nucleic acid-adsorptive porous membrane held in the cylindrical body, in which separation and purification of nucleic acid are conducted by passing a sample solution containing nucleic acid by pressurized gas from the first opening to the second opening to allow the nucleic acid to be adsorbed to the nucleic acid-adsorptive porous membrane; a cartridge for nucleic acid separation and purification produced by insert injection molding; and a method for producing the cartridge.

### Background art

Though nucleic acid has been used in various forms in various fields, it is often the case that only a trace amount of nucleic acid can be obtained, while operations of separation and purification are complicated and time-consuming.

A proposal has been made to provide a method for simply and effectively separating and purifying nucleic acid, which utilizes a nucleic acid separation and purification unit formed of a container having at least two openings which contains a solid phase of organic polymer having hydroxyl group on the surface of the polymer (see Japanese laid-open patent application JP2003-128691A (hereinafter, referred to as "patent document 1"; see FIG. 19). In this method, first, an opening Z of the nucleic acid separation and purification unit is immersed in a sample solution containing nucleic acid. Then, an inside of the nucleic acid separation and purification unit is depressurized by a differential pressure generator connected to the other opening Y, to thereby suck the sample solution into the container. As a result of this operation, the sample solution is brought into contact with the solid phase, and the nucleic acid in the sample solution is allowed to be adsorbed to the solid phase. Subsequently, the inside of the container of the unit is pressurized by the differential pressure generator, to thereby discharge the sucked sample solution.

Next, the same operation of the depressurization-pressurization as explained above is repeated to suck a washing liquid into the container, and then the washing liquid is discharged from the container to thereby wash the container. The washing liquid has a function of washing away the sample solution remaining in the container, as well as a function of washing away impurities that had been contained in the sample solution and adsorbed to the solid phase together with nucleic acid. Further, the same operation of the depressurization-pressurization as explained above is repeated to suck a recovery liquid for removing the nucleic acid adsorbed to the solid phase into the container, and then the recovery liquid is discharged from the container. Since the discharged recovery liquid contains desired nucleic acid, the liquid is collected, and with this operation the separation and purification is completed.

For a solid phase to be used for nucleic acid adsorption, a nucleic acid-adsorptive porous membrane is generally used.

In general, such a nucleic acid separation and purification unit (cartridge for nucleic acid separation and purification) is composed of two cylindrical members as containers of the unit, and a nucleic acid-adsorptive porous membrane pinched between these cylindrical members. These two cylindrical members are generally fixed together by, for example, ultrasonic welding, heat welding with laser, adhesive, screw or the like.

### Summary of the invention

Such a nucleic acid separation and purification unit is produced by: preparing two cylindrical members as containers by injection molding; placing a nucleic acid-adsorptive porous membrane in one of the cylindrical members; and then assembling two cylindrical members with an assembling machine . In this case, the cylindrical members have to be adhered together by ultrasonic welding, heat welding with laser or the like, after assembling two cylindrical members together. Therefore, a special facility (such as an ultrasonic welder) is required for adhering two cylindrical members.

In the nucleic acid separation and purification unit, the sample solution is forced to pass through the nucleic acid-adsorptive porous membrane by pressurization. In order to prevent the sample solution from leaking from a side face of the nucleic acid-adsorptive porous membrane (contact part of the container and the membrane), a rim part of the nucleic acid-adsorptive porous membrane has to be held with firm compression by two parts composing a container.

When a plurality of cartridges for nucleic acid separation and purification are produced at the same time, a plurality of cylindrical members are pressed at the same time with nucleic acid-adsorptive porous membranes being pinched between corresponding cylindrical members. Since manufacturing error may occur, height of the members may become varied, and forces compressing respective nucleic acid-adsorptive porous membranes may become different from one another. In the case of the membrane to which insufficient compressing force is applied, sealing becomes poor. On the other hand, in the case of the membrane to which excessive compressing force is applied, the membrane may be broken. Therefore, it is considered difficult to produce a number of cartridges for nucleic acid separation and purification at the same time with this method.

In addition, in the case of the above-mentioned cartridge for nucleic acid separation and purification, it is desired that the washing liquid do not remain in the container after washing the cartridge with the washing liquid. If the washing liquid remains in the container and nucleic acid is recovered with the recovery liquid, the discharged recovery liquid is contaminated with the washing liquid. Depending on the concentration of the contaminant washing liquid, the washing liquid may have unfavorable effect on, for example, PCR (Polymerase Chain Reaction) or other processes in later steps.

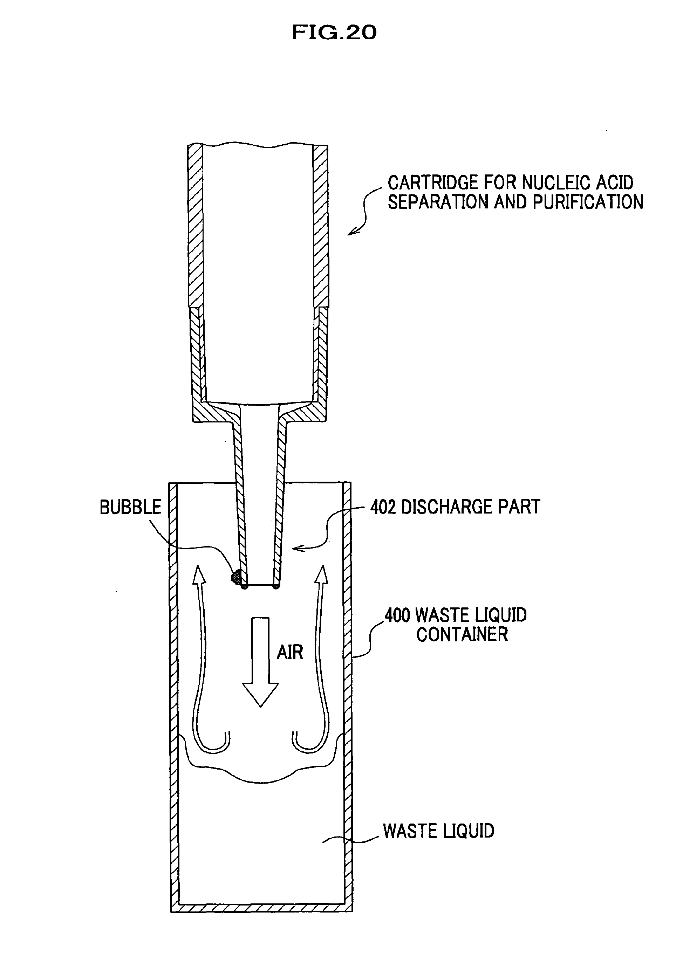

Moreover, in the case of the above-mentioned cartridge for nucleic acid separation and purification, even after completion of discharge of the solution and the like from the cartridge, air is kept introduced into the cartridge by a pressurizer. Under this condition, if the solution and the like passes through the membrane for separating and purifying nucleic acid, fine bubbles tend to be generated since the membrane is porous. This phenomenon is apt to occur especially when the sample solution is highly viscous. The generated fine bubbles are carried to the other opening for discharging solution or the like by pressurized air, and accumulated near an opening of a discharge part 402 (see FIG. 20). In addition, air blown out from the opening swirls up inside a waste liquid container 400 disposed below the cartridge, and moves the bubbles to an outer wall surface of the discharge part to which the bubbles attach.

During a subsequent recovery step using the recovery liquid, the attached bubbles are collected with the purified nucleic acid. Since the collected bubbles are substantially composed of unwashed solution, the bubbles are impurity in terms of the nucleic acid recovered with the recovery liquid. In other words, the problems may arise in that a purification rate of nucleic acid is lowered, and that enzymatic reaction is hindered during experiment or study using a nucleic acid recovered in a later process.

The present invention was made to solve the above-mentioned problems, and a first obj ect of the present invention is to provide a cartridge for nucleic acid separation and purification and a method for producing the cartridge, which do not require a special facility for adhering containers and can produce a number of cartridges at the same time.

The second object of the present invention is to provide a cartridge for nucleic acid separation and purification in which a washing liquid is prevented from remaining in the container (i.e. the washing liquid is easily discharged) during washing step, when performing nucleic acid separation and purification using a cartridge having a cylindrical body with a first opening and a second opening and having a nucleic acid-adsorptive porous membrane held in the cylindrical body, by passing a sample solution containing nucleic acid by pressurized gas from the first opening to the second opening to allow the nucleic acid to be adsorbed to the nucleic acid-adsorptive porous membrane.

The third object of the present invention is to provide a cartridge for nucleic acid separation and purification in which a solution or the like is prevented from attaching to an outer wall surface of a discharge part.

In order to attain the above-mentioned objects, the cartridge for nucleic acid separation and purification of the present invention is provided which includes: a cylindrical main body formed of a cylindrical part and a bottom part having an opening: and a nucleic acid-adsorptive porous membrane held on the bottom part, a rim part of the nucleic acid-adsorptive porous membrane being held by a molding material forming the cylindrical part of the cylindrical main body, which cartridge is produced by: inserting a bottom member and the nucleic acid-adsorptive porous membrane into a cavity of an injection molding die wherein the nucleic acid-adsorptive porous membrane is placed in the bottom member providing the bottom part which is one of two parts that sandwich and hold the nucleic acid-adsorptive porous membrane; and injecting the molding material into the cavity to form the cylindrical part of the cylindrical main body wherein a portion forming the cylindrical part which is the other of the two parts that sandwich and hold the nucleic acid-adsorptive porous membrane is integrated with the bottom member while the nucleic acid-adsorptive porous membrane is sandwiched and held between the cylindrical part and the bottom part.

According to the cartridge for nucleic acid separation and purification of the present invention, the cartridge is produced by inserting a bottom member and the nucleic acid-adsorptive porous membrane into a cavity of an injection molding die wherein the nucleic acid-adsorptive porous membrane is placed in the bottom member providing the bottom part which is one of two parts that sandwich and hold the nucleic acid-adsorptive porous membrane; and injecting the molding material into the cavity to form the cylindrical part of the cylindrical main body wherein a portion forming the cylindrical part which is the other of the two parts that sandwich and hold the nucleic acid-adsorptive porous membrane is integrated with the bottom member while the nucleic acid-adsorptive porous membrane is sandwiched and held between the cylindrical part and the bottom part. Therefore, a special facility for adhering, such as an ultrasonic welder, which has been conventionally required is unnecessary, and the cartridge for nucleic acid separation and purification can be produced solely with an injection molding device. In addition, problems can be prevented, such as breakage and poor sealing of the nucleic-acid adsorptive porous membrane, which would otherwise be caused by differences in compression forces applied to the membranes due to manufacturing error of parts.

In addition, it is preferred that the bottom member further include a cylindrical discharge part (nozzle) communicating with the opening of the bottom part. With this configuration, a liquid that has passed through the nucleic acid-adsorptive porous membrane does not spatter and runs down from the tip of the discharge part.

In addition, it is preferred that the rimpart of the nucleic acid-adsorptive porous membrane be held and compressed by injection pressure of the molding material forming the cylindrical part of the cylindrical main body. With this configuration, numerous voids (pores) present in the rim part of the membrane are compressed, and thus a sample solution and a washing liquid do not remain in the rim part, or the sample solution does not leak from a side face of the membrane.

In addition, it is preferred that the rimpart of the nucleic acid-adsorptive porous membrane be compressed until voids in the membrane disappear. With this configuration, the sample solution or the like is surely prevented from remaining in the rim part and leaking from the side face of the membrane.

In addition, it is preferred that the rim part of the nucleic acid-adsorptive porous membrane be compressed to a thickness of 10% to 70% of an initial thickness. With this configuration, numerous voids (pores) in the rim part of the membrane are compressed and collapsed. For this reason, the sample solution or the like is surely prevented from remaining in the rim part and leaking from the side face of the membrane.

With respect to a group of cartridges for nucleic acid separation and purification prepared by molding a plurality of the above-mentioned cartridges for nucleic acid separation and purification at the same time while connecting with one another, it is preferred that the injection molding die have a plurality of cavities; the bottom member with the nucleic acid-adsorptive porous membrane being placed therein be inserted in each of the plurality of cavities; and the plurality of cavities communicate with one another.

According to the group of cartridges for nucleic acid separation and purification, the injection molding die has a plurality of cavities, the bottom member with the nucleic acid-adsorptive porous membrane being placed therein is inserted in each of the plurality of cavities, and the plurality of cavities communicate with one another. With this configuration, it becomes possible to inject a resin into all cavities with the same injection pressure, and forces applied to the respective nucleic acid-adsorptive porous membranes become equal, leading to prevention of low sealability or breakage. For this reason, a number of cartridges for nucleic acid separation and purification can be produced at the same time, or a group of cartridges for nucleic acid separation and purification in which a number of cartridges for nucleic acid separation and purification are connected to one another can be produced.

The expression "connected" used herein means that the cartridges may be directly connected to one another or may be connected one another through runners. With this configuration, a plurality of cartridges for nucleic acid separation and purification can be produced at the same time, and production efficiency is remarkably increased.

A method according to the present invention for producing a cartridge for nucleic acid separation and purification which includes: a cylindrical main body formed of a cylindrical part and a bottom part having an opening: and a nucleic acid-adsorptive porous membrane held on the bottom part is provided, the method including: a step of placing a nucleic acid-adsorptive porous membrane on the bottom part provided in a bottom member, and placing the bottom member and the nucleic acid-adsorptive porous membrane in a cavity of an injection molding die; a step of pressing a core pin to the nucleic acid-adsorptive porous membrane while holding the nucleic acid-adsorptive porous membrane with a rim part of the nucleic acid-adsorptive porous membrane protruding from a periphery of an end face of the core pin, and closing the injection molding die; a step of injecting a molding material into the cavity, forming the cylindrical part of the cylindrical main body, and at the same time sandwiching and holding the rim part of the nucleic acid-adsorptive porous membrane between the molding material and the bottom part; and a step of removing a casting from the injection molding die.

According to the method for producing a cartridge for nucleic acid separation and purification of the present invention, the method includes a step of placing the nucleic acid-adsorptive porous membrane on the bottom part provided in a bottom member, and placing the bottom member and the nucleic acid-adsorptive porous membrane in a cavity of an injection molding die; a step of pressing a core pin to the nucleic acid-adsorptive porous membrane while holding the nucleic acid-adsorptive porous membrane with a rim part of the nucleic acid-adsorptive porous membrane protruding from a periphery of an end face of the core pin, and closing the injection molding die; a step of injecting a molding material into the cavity, forming the cylindrical part of the cylindrical main body, and at the same time sandwiching and holding the rim part of the nucleic acid-adsorptive porous membrane between the molding material and the bottom part; and a step of removing a casting from the injection molding die. Therefore, a process for adhering the cylindrical members to one another using an ultrasonic welder or the like is unnecessary, and the cartridge for nucleic acid separation and purification can be produced solely with an injection molding device. In addition, problems can be prevented, such as breakage and poor sealing of the nucleic-acid adsorptive porous membrane, which would otherwise be caused by differences in compression forces applied to the membranes due to manufacturing error (size error) of parts.

In addition, it is preferred in the method for producing the cartridge for nucleic acid separation and purification that the core pin compress and hold the nucleic acid-adsorptive porous membrane so that a thickness of the nucleic acid-adsorptive porous membrane becomes 10% to 70% of an initial thickness. With this configuration, the membrane does not slide out of alignment or get wrinkles, by injection pressure of the molding material.

In addition, it is preferred in the method for producing the cartridge for nucleic acid separation and purification that an end part of the core pin be in a cone shape which tapers from a circular rim to a center of the end face. With this configuration, the core pin is autonomously centered.

In addition, it is preferred in the method for producing the cartridge for nucleic acid separation and purification that the rim part of the nucleic acid-adsorptive porous membrane protruding from the periphery of the end face of the core pin be compressed by injection pressure of the molding material injected into the cavity until voids inside are collapsed. With this configuration, the sample solution or the like is surely prevented from remaining in the rim part and leaking from the side face of the membrane.

In addition, it is preferred in the method for producing the cartridge for nucleic acid separation and purification that the rim part of the nucleic acid-adsorptive porous membrane protruding from the periphery of the end face of the core pin be compressed to a thickness of 10% to 70% of an initial thickness by injection pressure of the molding material injected into the cavity. With this configuration, numerous voids (pores) in the rim part of the membrane are compressed and collapsed. For this reason, the sample solution or the like is surely prevented from remaining in the rim part and leaking from the side face of the membrane.

In addition, it is preferred in the method for producing a number of cartridges for nucleic acid separation and purification at the same time by utilizing the above-mentioned method for producing the cartridge for nucleic acid separation and purification that the injection molding die have a plurality of cavities; the bottom member with the nucleic acid-adsorptive porous membrane being placed therein be inserted in each of the plurality of cavities; and the plurality of cavities communicate with one another.

According to the method for producing a number of cartridges for nucleic acid separation and purification at the same time, the injection molding die has a plurality of the cavities, the bottom member with the nucleic acid-adsorptive porous membranes being placed therein is inserted in each of the plurality of cavities, and the plurality of cavities communicate with one another. With this configuration, it becomes possible to inject a resin into all cavities with the same injection pressure, and forces applied to the respective nucleic acid-adsorptive porous membranes become equal, leading to prevention of low sealability or breakage. For this reason, a number of cartridges for nucleic acid separation and purification can be produced at the same time, or a group of cartridges for nucleic acid separation and purification in which a number of cartridges for nucleic acid separation and purification are connected to one another can be produced.

A cartridge for nucleic acid separation and purification according to the present invention includes a cylindrical body with a first opening and a second opening and has a nucleic acid-adsorptive porous membrane held in the cylindrical body, in which separation and purification of nucleic acid are conducted by passing a sample solution containing nucleic acid by pressurized gas from the first opening to the second opening to allow the nucleic acid to be adsorbed to the nucleic acid-adsorptive porous membrane, wherein: the cylindrical body includes : a cylindrical main body having a bottom part supporting the nucleic acid-adsorptive porous membrane; and a discharge part connecting a bottom part opening formed in the bottom part and the second opening; the bottom part has a bottom face and a plurality of protrusions formed on the bottom face; at least a part of a top part of each protrusion supports the nucleic acid-adsorptive porous membrane; and a closer portion of the nucleic acid-adsorptive porous membrane to the bottom part opening is made more displaced towards the discharge part during use.

According to the cartridge for nucleic acid separation and purification of the present invention, at least a part of a top part of each protrusion provided on the bottom face supports the nucleic acid-adsorptive porous membrane, and a closer portion of the nucleic acid-adsorptive porous membrane to the bottom part opening is made more displaced towards the discharge part during use. With this configuration, when a washing liquid is forced to flow by pressurized gas during washing step, the nucleic acid-adsorptive porous membrane is deformed into a convex shape protruding towards the discharge part, along the protrusion. For this reason, the washing liquid is rapidly discharged from the discharge part without remaining on the bottom part of the cylindrical main body.

In addition, it is preferred that the plurality of protrusions be a plurality of ribs radially extending from the bottompart opening. In this case, it is preferred that the number of ribs be 3 ormore. A slope angle of each rib in a radial direction of the cylindrical body is preferably 3° or more, more preferably 5° or more.

In addition, it is preferred that the bottom face have a slope so that a closer portion of the bottom face to the bottom part opening is displaced more towards the discharge part. With this configuration, the washing liquid is rapidly discharged. A slope angle of the bottom face in radial direction of the cylindrical body is preferably 10° or more, more preferably 15° or more, most preferably 20° or more.

In addition, it is preferred that the top part of the rib be rounded. With this configuration, the washing liquid is prevented from remaining between the top part of the rib and the nucleic acid-adsorptive porous membrane, and the washing liquid is more rapidly discharged. In addition, it is preferred that edges and corners present in an inner surface of the cartridge for nucleic acid separation and purification be rounded. With this configuration, the washing liquid is prevented from remaining on the edges and the corners present in the inner surface, and the washing liquid is more rapidly discharged. The curvature radius of the top part of the rib is preferably 1/4 or more, more preferably 1/3 or more, most preferably 1/2 or more of the width of the rib. The curvature radius of the edge is preferably 0.1 mm or more, more preferably 0.2 mm or more, most preferably 0. 3 mm ore more. The curvature radius of the corner is preferably 0.1 mm or more, more preferably 0.15 mm or more, most preferably 0.2 mm or more.

In addition, an angle formed by an axis of the cylindrical body and the inner periphery face of the cylindrical body is preferably 10° or less, more preferably 5° or less. With this configuration, the washing liquid is easily run down along the inner periphery face of the cylindrical body, and the washing liquid is more rapidly discharged.

In addition, it is preferred that the inner wall surface of the cartridge for nucleic acid separation and purification be made of a material which realizes a contact angle of 80° or less or 90° or more with a washing liquid droplet, and a material subjected to surface treatment to render such a contact angle. When the contact angle is 80° or less, wettability for the washing liquid of the inner wall surface of the cartridge for nucleic acid separation and purification is enhanced, and it becomes difficult for the washing liquid to remain in a form of droplet. Accordingly, the washing liquid is more rapidly discharged. In order to further improve the wettability, the contact angle is more preferably 60° or less, most preferably 50° or less.

In a case where the contact angle is 90° or more, even when the washing liquid remains in a form of droplet on the inner wall surface of the cartridge for nucleic acid separation and purification, the washing liquid can be easily removed by pressurized gas, since the droplet is in nearly a spherical shape due to surface tension. For this reason, the washing liquid is more rapidly discharged.

In addition, it is preferred that the nucleic acid-adsorptive porous membrane be held with a rim part thereof being compressed. The membrane has pores, and when the membrane is held with the rim part being compressed, the pores are pressed and collapsed, which blocks the leaking of liquid. With this configuration, liquids (sample solution or the like) which are to pass through the membrane are prevented from leaking from a side face of the membrane.

A cartridge for nucleic acid separation and purification of the present invention includes a cylindrical body with a first opening and a second opening and has a nucleic acid-adsorptive porous membrane held in the cylindrical body, in which separation and purification of nucleic acid are conducted by passing a sample solution containing nucleic acid by pressurized gas from the first opening to the second opening to allow the nucleic acid to be adsorbed to the nucleic acid-adsorptive porous membrane, wherein: the cylindrical body includes: a cylindrical main body having a bottom part supporting the nucleic acid-adsorptive porous membrane; and a discharge part connecting the bottom part opening formed in the bottom part and the second opening; and a thickness of a part forming the second opening of the discharge part is 0.2 mm or more.

It is more preferred that the thickness of the part forming the second opening be 0.5 mm or more.

By making the thickness of the part forming the second opening of the discharge part as mentioned above, a cartridge for nucleic acid separation and purification can be obtained in which bubbles are prevented from moving to or attaching to an outer wall surface of the discharge part, even when the bubbles are swirled up by air. Especially in the case of the cartridge having a cylindrical discharge part, the bubbles can be prevented from moving to the outer wall surface of the discharge part.

In the above-mentioned cartridge for nucleic acid separation and purification, it is preferred that a diameter of the second opening be 1.0 mm or more, and at the same time, the thickness of the part forming the second opening be 0.2 mm or more, and further, an outer diameter of the part forming the second opening be 1.4 mm or more.

It is more preferred that the outer diameter of the part forming the second opening be 2.0 mm or more.

By defining the diameter of the second opening, the thickness of the part forming the second opening, and the outer diameter of the part forming the second opening as mentioned above, a cartridge for nucleic acid separation and purification can be obtained that exhibits excellent dischargeability and excellent antiadhesiveness of the outer wall surface of the discharge part against bubbles.

In addition, in the above-mentioned cartridge for nucleic acid separation and purification, it is preferred that an angle formed by the end face of the discharge part and the outer wall surface of the discharge part be 105° or less. The angle formed by the end face and the outer wall surface of the discharge part is more preferably 100° or less, still more preferably 95° or less. In addition, the end face of the discharge part may be in a shape of a funnel with a portion closer to the second opening having a larger opening diameter. In this case, it is preferred that the angle formed by the end face and the outer wall surface of the discharge part be 30° or more.

Since the angle formed by the end face of the discharge part and the outer wall surface of the discharge part is formed as mentioned above, a cartridge for nucleic acid separation and purification can be obtained in which bubbles in the sample solution is prevented from moving to the outer wall surface of the discharge part. In addition, a cartridge for nucleic acid separation and purification can be obtained in which the bubbles easily go back to the vicinity of the second opening of the discharge part and thus easily be removed with a washing liquid, even when the bubbles attach to the outer wall surface. As a result, a cartridge for nucleic acid separation and purification can be obtained in which a recovery liquid is prevented from being contaminated with an unprocessed sample solution. In addition, when the end face of the discharge part is in a shape of a funnel with a portion closer to the second opening having a larger opening diameter, the generated bubbles are prevented from moving to the outer wall surface. In addition, the angle formed by the end face and the outer wall surface of the discharge part may be 30° or more, and with this configuration, the bubbles are prevented from moving to the outer wall surface.

Moreover, in the cartridge for nucleic acid separation and purification, it is preferred that resin hydrophilicity of the end face and the outer wall surface be enhanced. In other words, it is preferred that a material for the cartridge for nucleic acid separation and purification be easily wet.

When the end face of the discharge part alone is considered, enhancing water repellency results in poor wettability of the end face with a solution and thus the solution or bubble is easily repelled, which theoretically prevents the bubbles from attaching to the end face. In addition, surface energy required to lift up the bubbles from the end face to the outer wall surface becomes large, which also theoretically prevents the bubbles from attaching to the outer wall surface. However, when a cartridge having dimensions smaller than the above-mentioned cartridges was tested, bubbles moved to the outer wall surface did not fall down by gravity, due to a large surface energy obtained by water-repellent property of the outer wall surface. Moreover, the washing liquid also was repelled and failed to remove the bubbles. Therefore, in the cartridge for nucleic acid separation and purification, it is preferred that resin hydrophilicity of the end face and the outer wall surface be enhanced.

In the present specification, the term "wettability" means an affinity between a solution and an object (such as the end face and the outer wall surface), which is defined by a contact angle formed between the solution and the object. It was found from the experiment that, under the above-mentioned dimensions and shape, the contact angle formed between the object and the solution (washing liquid) which is suitable for holding bubbles on the end face and washing away impurity during washing step is, 100° or less, preferably 95° or less, more preferably 90° or less.

In the cartridge for nucleic acid separation and purification, it is desired that a lug member for guiding bubbles be provided on the end face of the discharge part. It is desired that the number of the lug member is selected between 1 and a plural number. It is also desired that an inner side of the lug member be flush with an inner wall surface of the discharge part. It is further preferred that each lug member have a shape of a rod.

With this configuration, bubbles at the second opening are easily led along the lug members extending from the inner wall surface, and are easily accumulated at the tip of the lug members further below a position of the second opening. Since the accumulated bubbles easily drop into a waste liquid container, the bubbles are prevented from attaching to the outer wall surface. Even when the bubbles are brown up by air, the bubbles do not reach the outer wall surface.

As shown above, according to the cartridge for nucleic acid separation and purification and the method for producing the cartridge of the present invention, a special facility for adhering containers is unnecessary, and a number of cartridges can be easily produced at the same time. Therefore, cost for production facilities can be remarkably reduced, and production efficiency can be remarkably increased.

According to the cartridge for nucleic acid separation and purification of the present invention, during washing step, a washing liquid is rapidly discharged without remaining in the cartridge for nucleic acid separation and purification. Therefore, a discharged recovery liquid is prevented from being contaminated with the washing liquid. As a result, troubles which would otherwise be caused by the washing liquid in subsequent steps can be prevented beforehand.

According to the cartridge for nucleic acid separation and purification of the present invention, bubbles in a sample solution can be prevented from attaching to the outer wall surface of the discharge part of the cartridge for nucleic acid separation and purification. In addition, contamination with bubbles of the unprocessed sample solution can be prevented, leading to improvement in purification rate of nucleic acid. In experiment or study using recovered nucleic acid, troubles such as hindrance to enzymatic reaction can be prevented.

### Brief description of the drawings

FIG. 1 is an exploded perspective view of a cartridge for nucleic acid separation and purification according to a first embodiment.
FIG. 2 is an enlarged sectional perspective view of an insert member used in the first embodiment.
FIG. 3 shows cross-sectional views of a cartridge for nucleic acid separation and purification and an injection molding die. (a) shows a condition during placement of an insert member, and (b) shows a condition during closing of the molding die.
FIG. 4 shows cross-sectional views of a cartridge for nucleic acid separation and purification and an injection molding die. (a) shows a condition during resin injection, and (b) shows a condition where injection is completed.
FIG. 5 shows enlarged sectional views of an area A in FIG. 4 (b) . (a) shows a condition during closing of the molding die, (b) shows a condition where the closing is completed, (c) shows a condition during resin injection, and (d) shows a condition where injection is completed.
FIG. 6 is a cross-sectional view of the cartridge for nucleic acid separation and purification according to the first embodiment.
FIG. 7 is a perspective view of a group of cartridges for nucleic acid separation and purification according to a second embodiment.
FIG. 8 is an exploded perspective view of a cartridge for nucleic acid separation and purification according to a third embodiment of the present invention.
FIG. 9 is a cross-sectional view of the cartridge for nucleic acid separation and purification according to the third embodiment of the present invention.
FIG. 10 is an enlarged sectional perspective view of a cap used in the third embodiment of the present invention.
FIG. 11 is a cross-sectional view along line X-X in FIG. 10.
FIG. 12 is an enlarged view of an area B in FIG. 9.
FIG. 13 is a cross-sectional view of the cartridge for nucleic acid separation and purification according to the third embodiment of the present invention during washing step.
FIG. 14 is an exploded perspective view of a cartridge for nucleic acid separation and purification according to a fourth embodiment of the present invention.
FIG. 15 is a cross-sectional view of the cartridge for nucleic acid separation and purification according to the fourth embodiment of the present invention.
FIG. 16 is an enlarged sectional view of a cap of the cartridge for nucleic acid separation and purification according to the fourth embodiment of the present invention.
FIG. 17 is an enlarged sectional view of a cap of a cartridge for nucleic acid separation and purification according to a fifth embodiment of the present invention.
FIG. 18 is an enlarged sectional view of a cap of a cartridge for nucleic acid separation and purification according to a sixth embodiment of the present invention.

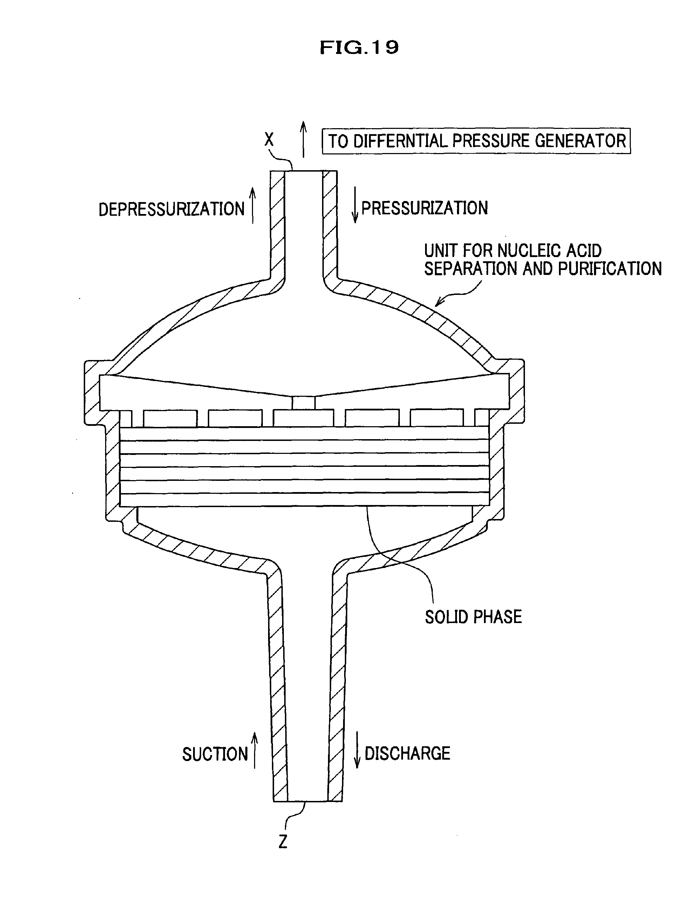

FIG. 19 is a longitudinal sectional view of a nucleic acid separation and purification unit.
FIG. 20 shows a cartridge for nucleic acid separation and purification which discharges a solution by pressurization.

### Description of the preferred embodiments

### [First embodiment]

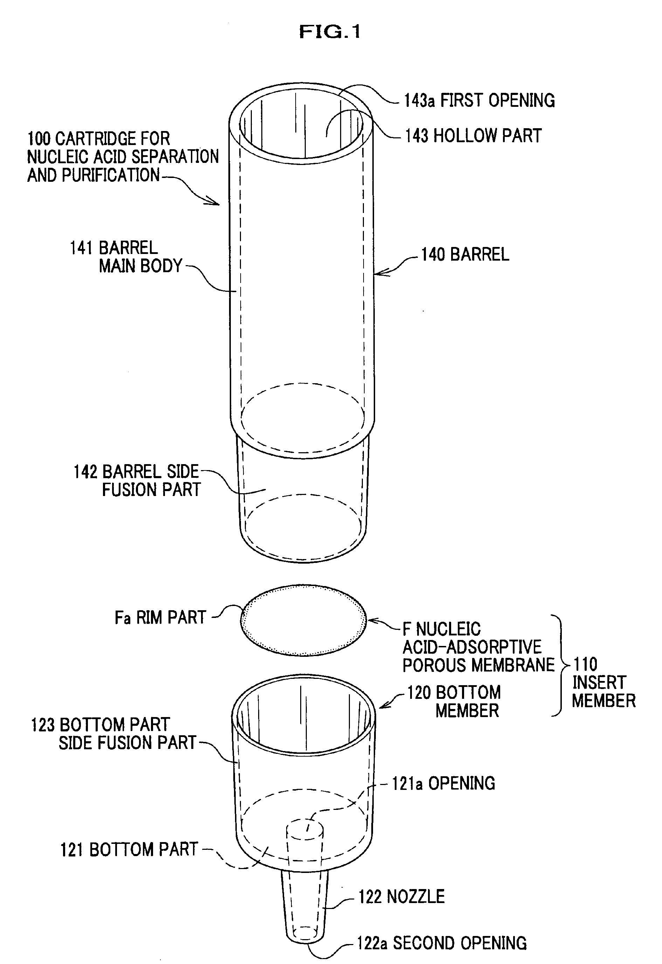

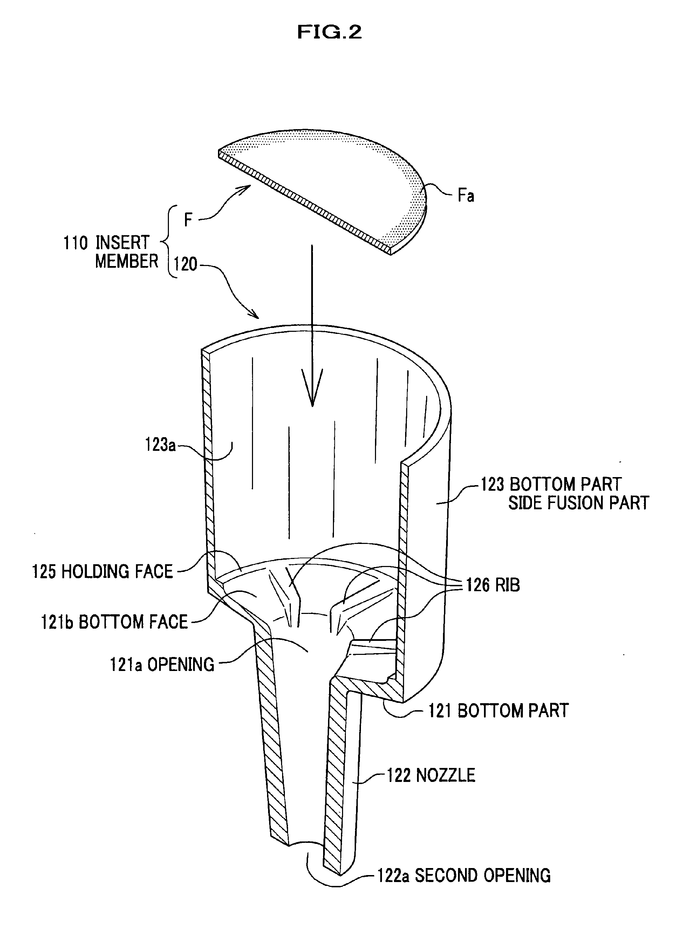

A first embodiment of a cartridge for nucleic acid separation and purification of the present invention will be explained below with reference to the drawings. FIG. 1 is an exploded perspective view of the cartridge for nucleic acid separation and purification according to the first embodiment. FIG. 2 is an enlarged sectional perspective view of an insert member used in the first embodiment.

### (Structure of the cartridge for nucleic acid separation and purification)

As shown in FIG. 1, a cartridge for nucleic acid separation and purification 100 according to the first embodiment of the present invention is composed of: an insert member 110 including a bottom member 120 and a nucleic acid-adsorptive porous membrane F; and a barrel 140 which is formed by insert injection molding with the insert member 110.

It should be noted that the barrel 140 of the cartridge for nucleic acid separation and purification 100 according to the first embodiment is integrally formed with the bottom member 120 and the nucleic acid-adsorptive porous membrane F by insert injection molding, though the barrel 140 is separately shown in FIG. 1 for convenience of explanation.

It should be noted that a "cylindrical main body" is composed of the barrel 140, a bottom part 121 and a bottom part side fusion part 123 shown in FIG. 1, and that the barrel 140 corresponds to the "portion forming a cylindrical part of a cylindrical main body".

### (Insert member 110)

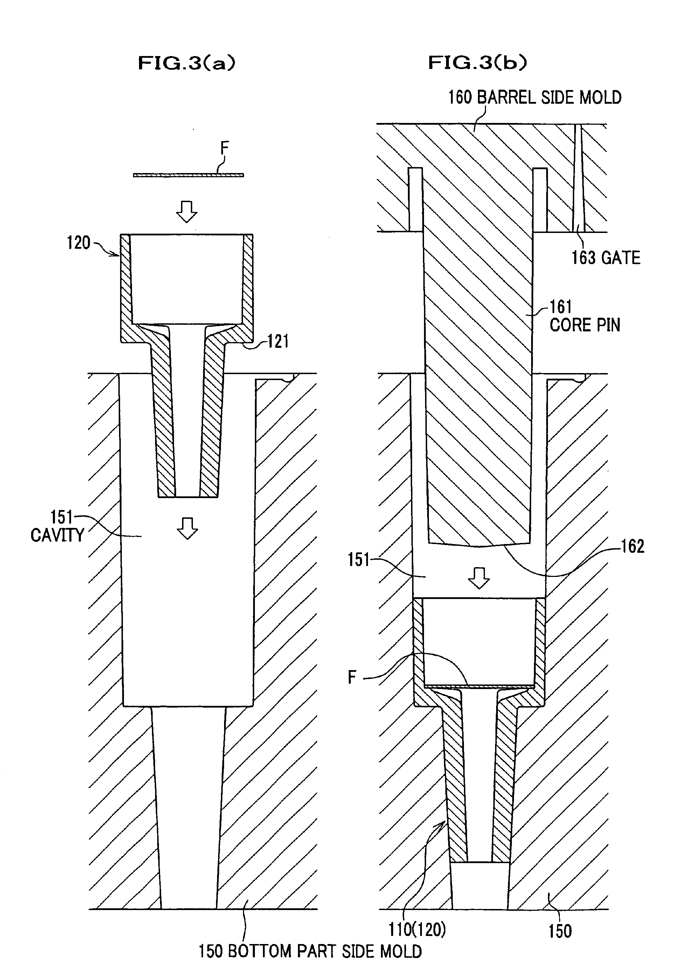

The insert member 110 is composed of: the bottom member 120 which is a portion of a cartridge for nucleic acid separation and purification 100 on the bottom part side; and the nucleic acid-adsorptive porous membrane F for adsorbing and recovering nucleic acid. The insert member 110 is placed in advance in an injection molding die for producing a cartridge for nucleic acid separation and purification 100 (formed of a bottom part side mold 150 and a barrel side mold 160) (see FIG. 3), and by injection of a molding material, such as a molten resin J, into a cavity 151, the insert member 110 is fused with the barrel 140 formed of the resin J.

### (Bottom member 120)

The bottom member 120 is composed of the bottom part 121 having an opening 121a at the center of the bottom part 121; a nozzle 122 (discharge part) extending from a bottom face of the bottom part 121; and the bottom part side fusion part 123 cylindrically extending along an outer periphery of the bottom part 121 in opposite direction to the nozzle 122. At the end of the nozzle 122, a second opening 122a is formed, which communicates with the opening 121a of the bottom part 121. The bottom part side fusion part 123 is configured to be fused with a barrel side fusion part 142 of the barrel 140, which will be described below, and an inner diameter of the bottom part side fusion part 123 is nearly equal to a diameter of the nucleic acid-adsorptive porous membrane F.

As shown in FIG. 2, along the outer circumference of a bottom face 121b on the bottom part 121 of the bottom member 120, a holding face 125 in a shape of a ring is formed which is one step higher than the bottom face 121b. The holding face 125, which is in a flat shape, is configured to be brought into contact with a rim part Fa of the nucleic acid-adsorptive porous membrane F, which will be described below. The bottom face 121b slopes down from the holding face 125 to the opening 121a (in such manner that a portion closer to the second opening 122a is made lower), so that a sample solution is easily discharged. In addition, on the bottom face 121b, six ribs 126 (though only three ribs are shown in FIG. 2) are radially formed. Each rib 126 is protruding from the bottom face 121b, and more gently slopes down from the holding face 125 side to the opening 121a side, as compared with the slope of the bottom face 121b.

### (Nucleic acid-adsorptive porous membrane F)

The nucleic acid-adsorptive porous membrane F is a circular filmmember which has nearly the same diameter as the inner diameter of the bottom part side fusion part 123. The nucleic acid-adsorptive porous membrane F has numerous fine pores, and can extract nucleic acid by filtering a sample solution. The nucleic acid-adsorptive porous membrane F is placed on the holding face 125 of the bottom member 120, together forming an insert member 110 (see FIG. 2). The rim part Fa of the nucleic acid-adsorptive porous membrane F is a part contacting with the holding face 125, and held on the holding face 125 and compressed by injection pressure during injection molding of the barrel 140, which will be described below.

### (Barrel 140)

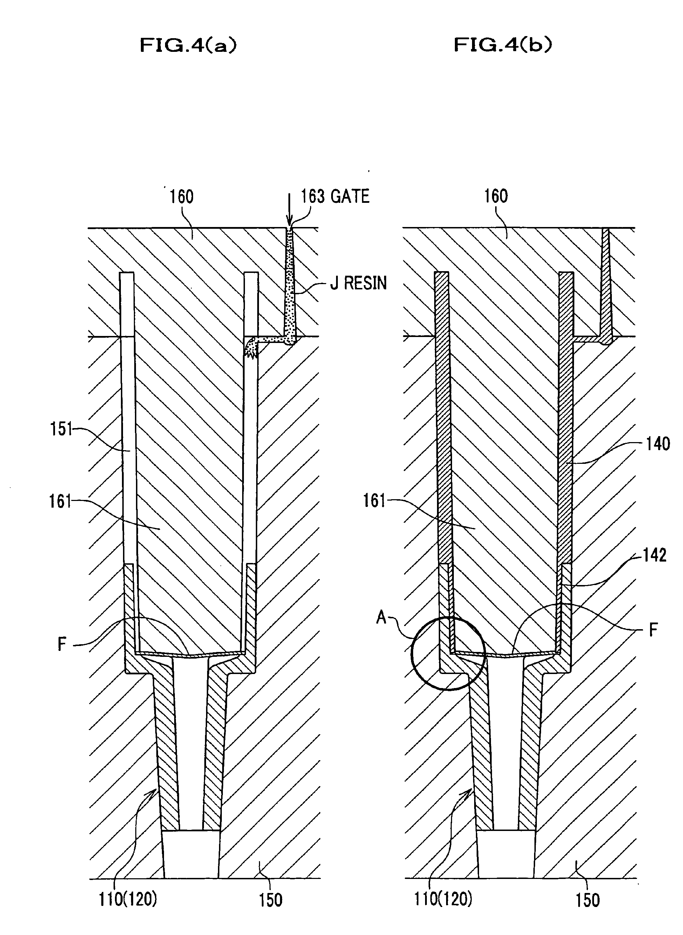

As shown in FIG. 1, the barrel 140 is formed of a barrel main body 141 in a shape of a cylinder and the barrel side fusion part 142 in a shape of a cylinder contiguous to the barrel main body 141. The barrel 140 is formed by injecting a resin J into the cavity 151, after placing the insert member 110 in the bottom part side mold 150 (see FIG. 3) . A hollow part 143 of the barrel 140 is for temporarily reserving a sample solution or the like, which is formed by use of a core pin 161 equipped on the barrel side mold 160, which will be described below (see FIG. 4).

As shown in FIG. 1, an upper end of the hollow part 143 has an opening (first opening 143a), and a lower end of the hollow part 143 is to be closed with the nucleic acid-adsorptive porous membrane F.

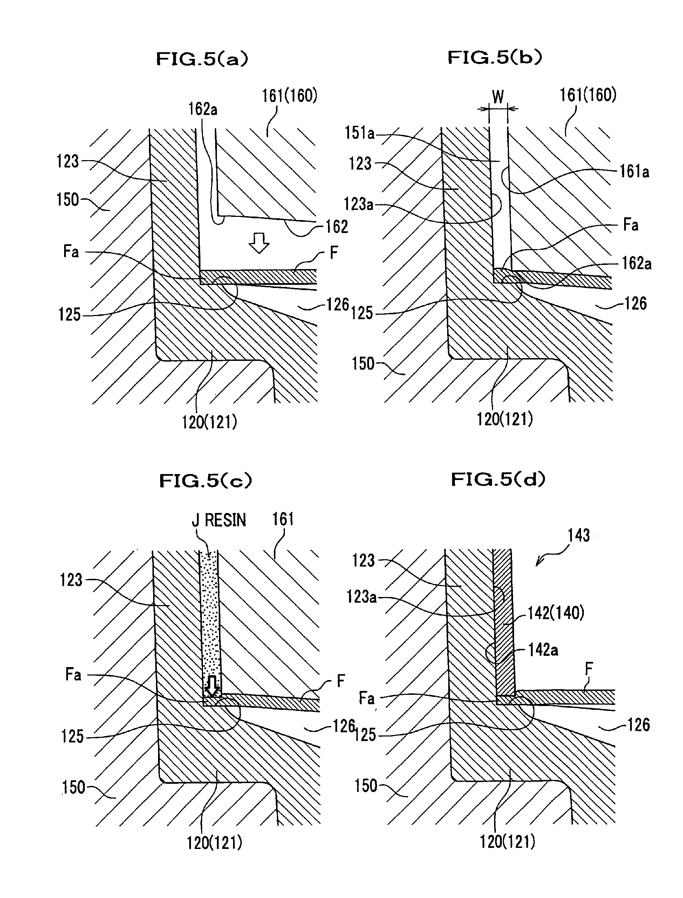

The barrel side fusion part 142 is made of a resin J introduced into a gap (cavity 151a in FIG. 5(b)) formed between the core pin 161 and the bottom part side fusion part 123 of the bottommember 120. Therefore, practically, heat of the resin J flowed into the gap melts an inner periphery face 123a of the bottom part side fusion part 123 (see FIG. 2), and thus the barrel 140 and the insert member 110 are integrated.

### (Method for producing the cartridge for nucleic acid separation and purification)

Next, a method for producing the cartridge for nucleic acid separation and purification according to the first embodiment will be explained below with reference to the drawings. FIG. 3 shows cross-sectional views of a cartridge for nucleic acid separation and purification and an injection molding die. (a) shows a condition during placement of an insert member, and (b) shows a condition during closing of the molding die. FIG. 4 shows cross-sectional views of a cartridge for nucleic acid separation and purification and an injection molding die. (a) shows a condition during resin injection, and (b) shows a condition where injection is completed.

It should be noted that, for the production of the cartridge for nucleic acid separation and purification 100, conventional injection molding machines can be used. Since the insert member 110 should be set in the injection molding die, an upright type injection molding machine is preferably used. However, the injection molding machine may be a horizontal type, as long as it can hold the insert member 110 (nucleic acid-adsorptive porous membrane F) at a predetermined position. In the present embodiment, the "injection molding die" is composed of the bottom part side mold 150 and the barrel side mold 160.

### (Placing the insert member 110)

First, as shown in FIG. 3(a), the nucleic acid-adsorptive porous membrane F is placed in the bottom member 120 produced in advance, in such manner that the membrane F is supported by the holding face 125 and the rib 126 of the bottom part 121, to thereby prepare the insert member 110. The insert member 110 is inserted into the cavity 151 formed in the bottom part side mold 150.

It should be noted that the insert member 110 may be prepared in advance. It is preferred that the production of the insert member 110 and the placement of the insert member 110 be performed using a conventional assembly robot or the like.

### (Closing the molding die and holding the nucleic acid-adsorptive porous membrane F)

Next, as shown in FIG. 3(b), the barrel side mold 160 is combined with the bottom part side mold 150 in which the insert member 110 is set, and the molds are closed.

The barrel side mold 160 has the core pin 161 in a shape of a column at the position corresponding to the position of the hollow part 143 of the cartridge for nucleic acid separation and purification 100. When the both molds 150 and 160 are closed, an end part 162 of the core pin 161 is brought into contact with an upper face of the nucleic acid-adsorptive porous membrane F, and the membrane F is pinched between the core pin 161 and the holding face 125 of the bottom member 120. At this time, the nucleic acid-adsorptive porous membrane F is compressed to a predetermined thickness that does not allow the resin J which will be injected in the next step to leak. In other words, the length of the core pin 161 is adjusted so that the membrane F is compressed to a certain thickness that does not allow the resin J which will be injected in the next step to leak. Fixation (compression) of the membrane F will be described in detail below.

In addition, the barrel side mold 160 is provided with a gate 163 for injecting the resin J, which allows the injection of the resin J into the cavity 151.

### (Injecting resin)

Next, as shown in FIG. 4 (a), a molten resin J is injected through the gate 163 into the cavity 151 formed of the bottom part side mold 150, the barrel side mold 160 and the insert member 110. Due to injection pressure of the resin J filled in the cavity 151, the rimpart Fa of the nucleic acid-adsorptive porous membrane F is compressed. Specifically, the cavity 151 is filled with the molten resin J with injection pressure which suitably compresses the rim part Fa of the membrane F. This mechanism will be described in detail below.

### (Opening the molding die and removing the cartridge for nucleic acid separation and purification 100)

Then, as shown in FIG. 4(b), after the resin filling is completed and the resin J cools off to cure, an injection molding machine (not shown) is operated to open the molding die, and a cartridge for nucleic acid separation and purification 100 is removed.

Referring to FIG. 5, compression and holding of the rim part Fa of the nucleic acid-adsorptive porous membrane F by the injected resin J will be described below in detail. FIG. 5 shows enlarged sectional views of an area A in FIG. 4(b). (a) shows a condition during closing of themolding die, (b) shows a condition
where the closing is completed, (c) shows a condition during resin injection, and (d) shows a condition where injection is completed.

First, as shown in FIG. 5(a), when the molds are closed, the bottom member 120 and the nucleic acid-adsorptive porous membrane F as the insert member 110 are placed in the cavity 151 of the bottompart side mold 150. The nucleic acid-adsorptive porous membrane F is placed in such a manner that the rim part Fa is brought into contact with the holding face 125 formed on the bottom part 121 of the bottommember 120. Under this condition, the injection molding machine (not shown) is operated and the barrel side mold 160 is lowered.

A diameter of the core pin 161 of the barrel side mold 160 is smaller than the inner diameter of the bottom part side fusion part 123 of the bottom member 120, and larger than an inner diameter of the holding face 125. Therefore, when the closing of the molds is completed, a portion of the rim part Fa of the nucleic acid-adsorptive porous membrane F is pinched between a rim part 162a of the end part 162 of the core pin 161 and an inner circumference side edge part of the holding face, 125, as shown in FIG. 5(b).

In addition, the end part 162 of the core pin 161 has a slope from the rim part 162a to a center thereof, in such a manner that the slope matches the slope of an upper end face of the rib 126. Therefore, when the molding die is closed, the nucleic acid-adsorptive porous membrane F is sandwiched and held between the upper end face of the rib 126 and the end part 162 of the core pin 161, and also between the inner circumference side edge part of the holding face 125 and the rim part 162a of the end part 162 of the core pin 161, as shown in FIG. 5(b).

Since the end part 162 of the core pin 161 is formed in a shape of a convex (or cone) so as to match the shape of the bottom part 121, the core pin 161 is autonomously centered in the bottom member 120. Therefore, a predetermined member thickness (a width of the gap of the cavity 151a) can be secured without causing decentering of the core pin 161.

The nucleic acid-adsorptive porous membrane F should be compressed by the core pin 161, to such an extent that the nucleic acid-adsorptive porous membrane F is not broken without sliding out of alignment or getting wrinkles or allowing the resin J to leak, when injection pressure of the resin J is applied. Specifically, it is suitable that the membrane be compressed to a thickness of approximately 10 % to 70 % of the initial thickness.

By compressing (holding) the nucleic acid-adsorptive porous membrane F in the above-mentioned manner, the cavity 151a for molding the barrel side fusion part 142 of the barrel 140 (see FIG. 1) is formed as a space defined by the rim part Fa of the nucleic acid-adsorptive porous membrane F, the inner periphery face 123a of the bottom part side fusion part 123, and an outer periphery face 161a of the core pin 161. At this time, the rim part Fa of the nucleic acid-adsorptive porous membrane F, which protrudes from the end part 162 of the core pin 161, is not compressed.

Taking into consideration a slight tilt of the core pin 161 cased by injection pressure of the resin J or thickness error in the bottom part side fusion part 123, a width W of the gap of the cavity 151a (see FIG. 5 (b)) is preferably 0.2 mm or more, more preferably 0.5 mm or more.

Then, when the molten resin J is injected from a gate 163 (see FIG. 4 (a)), the cavity 151a is filled with the molten resin J as shown in FIG. 5 (c) . The molten resin J does not permeate the nucleic acid-adsorptive porous membrane F, but presses the rim part Fa of the membrane F exposed to the cavity 151a, with fluid pressure of the molten resin J. Therefore, by injecting the resin J with a predetermined injection pressure, the rim part Fa of the membrane F can be compressed to a predetermined thickness. Specifically, the compression is made until pores in the rim part Fa disappear. For example, it is confirmed by the experiments of the present inventors that, in the case of the nucleic acid-adsorptive porous membrane F (thickness: 80 µm) made of triacetyl cellulose subjected to saponification, compression of the membrane F to 30 µm prevents the sample solution from leaking from the side face of the membrane F. Since a portion of the rim part Fa of the membrane F is annularly pinched between the inner circumference side edge part of the holding face 125 and the rim part 162a of the core pin 161, the resin J injected into the cavity 151a does not flow towards a central portion of the nucleic acid-adsorptive porous membrane F.

In addition, experiments regarding injection pressure of the resin J were conducted using the nucleic acid-adsorptive porous membrane F (thickness: 80 µm) made of triacetyl cellulose subjected to saponification, and polypropylene at temperature of 200°C as a resin J. As a result, it was found that, when the injection pressure of the resin J was 14.7 MPa (150 kgf/cm²) or less, the rim part Fa of the nucleic acid-adsorptive porous membrane F protruding from the periphery of an end face of the core pin 161 was not compressed enough. The thickness was 60 µm, which was not sufficient to collapse the voids inside. Moreover, when a cartridge for nucleic acid separation and purification 100 produced in such a manner was used, the sample solution leaked from the side face of the membrane F. On the other hand, when the injection pressure was 147 MPa (1, 500 kg/cm²) or more, the membrane F was broken during production. Therefore, it is desired that injection pressure of the resin J is set above 14.7 MPa and below 147 MPa.

As shown in FIG. 5(d), when the molds are opened after curing the resin J in a shape of the barrel 140, the core pin 161 is taken out from the hollow part 143 of the barrel 140. The rim part Fa of the nucleic acid-adsorptive porous membrane F is pinched between the barrel side fusion part 142 formed by injection molding and the holding face 125, and supported by the bottom part 121 of the cartridge for nucleic acid separation and purification 100. Moreover, the inner periphery face 123a of the bottom part side fusion part 123 is molten by heat of the injected resin, and thus is integrated with an outer periphery face 142a of the barrel side fusion part 142.

In this manner, the barrel 140 is formed and at the same time the nucleic acid-adsorptive porous membrane F is held, and therefore a special facility for fixing two cartridge components together,which hasbeen conventionally required, is unnecessary. Moreover, since the nucleic acid-adsorptive porous membrane F is held and compressed by injection pressure of the resin J, low sealability or breakage of the membrane F due to dimension error of parts is prevented.

### (Method for using the cartridge for nucleic acid separation and purification 100)

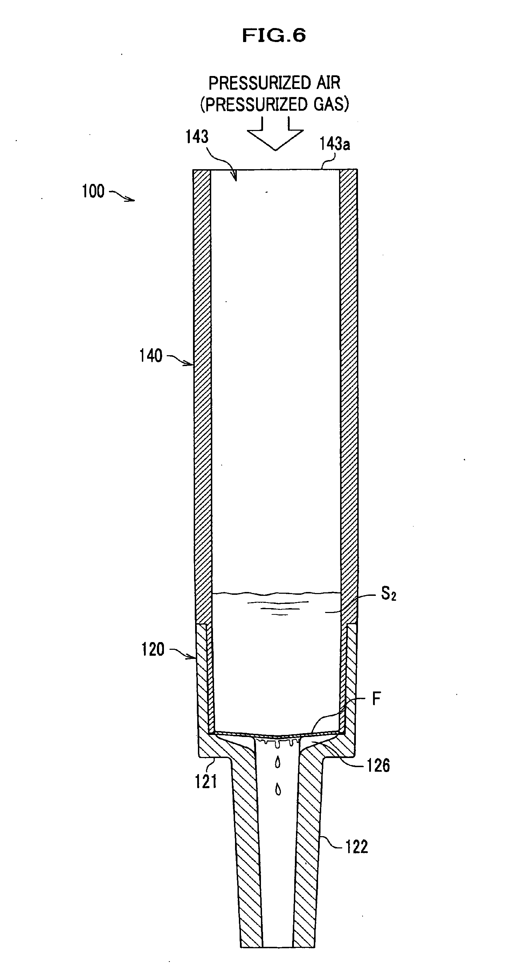

Next, a method for using the cartridge for nucleic acid separation and purification 100 will be described. FIG. 6 is a cross-sectional view of a cartridge for nucleic acid separation and purification according to the first embodiment.

It is preferred that the process of separating and purifying nucleic acid from the sample using the cartridge for nucleic acid separation and purification 100 be performed by an automated device. With use of such a device, it becomes possible not only to simply and rapidly conduct the operation, but also to obtain nucleic acid of a certain level regardless of a skill of an operator.

For example, in the above-mentioned automated device for separating and purifying nucleic acid (not shown), the sample solution containing nucleic acid is forced to flow from the first opening 143a of the barrel 140 of the cartridge for nucleic acid separation and purification 100 to the second opening 122a of the nozzle 122 by pressurized gas, such as pressurized air, to thereby allow nucleic acid to be adsorbed to the nucleic acid-adsorptive porous membrane F; a washing liquid S₂ is forced to flow in the same manner to thereby remove impurities; subsequently, a recovery liquid is forced to flow in the same manner to thereby remove the nucleic acid adsorbed to the nucleic acid-adsorptive porous membrane F; and the nucleic acid is recovered together with the recovery liquid. The automated device may include a mount mechanism configured to hold the cartridge for nucleic acid separation and purification 100, a waste liquid container for containing a discharged liquid derived from the sample solution and the washing liquid S₂ and a recovery container for containing the recovery liquid including nucleic acid; a pressurized air supply mechanism configured to introduce pressurized air to the cartridge for nucleic acid separation and purification 100; and a dispensing mechanism configured to dispense the washing liquid S₂ and the recovery liquid into the cartridge for nucleic acid separation and purification 100.

It is preferred that the mount mechanism include: a stand mounted on a device main body; a cartridge holder configured to hold the cartridge for nucleic acid separation and purification 100 supported by the stand, the holder being movable in vertical directions; and a container holder configured to hold the waste liquid container and the recovery container, the positions of the containers being switchable below the cartridge holder relative to the position of the cartridge for nucleic acid separation and purification 100.

It is preferred that the pressurized air supply mechanism include: an air nozzle configured to jet out pressurized air from a lower end thereof; a pressure head configured to support the air nozzle and to vertically move the air nozzle relative to the cartridge for nucleic acid separation and purification 100 held by the cartridge holder; and a positioning means mounted on the pressure head, the means being configured to position the cartridge for nucleic acid separation and purification 100 relative to a rack of the mount mechanism.

It is preferred that the dispensing mechanism include: a washing liquid-dispensing nozzle configured to dispense the washing liquid S₂; a recovery liquid-dispensing nozzle configured to dispense the recovery liquid; a stage configured to hold the washing liquid-dispensing nozzle and the recovery liquid-dispensing nozzle and to move the nozzles so as to sequentially position the nozzles above the cartridge for nucleic acid separation and purification 100 held by the mount mechanism; a washing liquid-supply pump configured to suck the washing liquid S₂ from the washing liquid bottle containing the washing liquid S₂ and to supply the washing liquid S₂ to the washing liquid-dispensing nozzle; and a recovery liquid-supply pump configured to suck the recovery liquid from the recovery liquid bottle containing the recovery liquid and to supply the recovery liquid to the recovery liquid-dispensing nozzle.

With respect to the specimen to be used in the present invention, there is no limitation. For example in the field of diagnosis, specimens may include fluid obtained from body, such as whole blood, blood plasma, blood serum, urine, feces, seminal fluid and saliva; solution prepared from biological material, such as plant (or part thereof), animal (or part thereof), lysate thereof and homogenate thereof.

First, such a specimen is treated with an aqueous solution containing a reagent that can lyse cell membrane and nuclear membrane to solubilize nucleic acid. As a result of lysis of cell membrane and nuclear membrane, nucleic acid is dispersed in the aqueous solution, and a sample solution containing nucleic acid is obtained. For example, in the case where whole blood is used, to the whole blood is added guanidine hydrochloride, Tris, Triton-X100 and Protease K (manufactured by SIGMA), and the resultant mixture is incubated at 60°C for 10 minutes to thereby remove erythrocyte and various proteins, and to lyse leukocyte and nuclear membrane.

The obtained sample solution is introduced to the hollow part 143 of the barrel 140 (see FIG. 6), and forced to flow towards the nozzle 122 by pressurization. As a result, the nucleic acid in the sample solution is adsorbed to the nucleic acid-adsorptive porous membrane F.

Next, as shown in FIG. 6, the washing liquid S₂ is forced to flow from the first opening 143a of the barrel 140 to the nozzle 122 by pressurization. The washing liquid S₂ has a composition that removes impurities without removing the nucleic acid adsorbed to the nucleic acid-adsorptive porous membrane F. During washing step, when pressurized, the membrane F is deformed into a convex shape protruding towards the nozzle 122, along the slope of the rib 126, as shown in FIG. 6. For this reason, the washing liquid S₂ is rapidly discharged from the nozzle 122 without remaining on the bottom part 121.

It is preferred that the washing liquid S₂ contain both an aqueous organic solvent and a salt, or either an aqueous organic solvent or a salt. The aqueous organic solvent, such as alcohol, is suitable for removing components other than nucleic acid while retaining nucleic acid in the membrane, since nucleic acid has low solubility to the aqueous organic solvent. By adding a salt, adsorption effect of nucleic acid is improved.

For an aqueous organic solvent contained in the washing liquid S₂, there can be mentioned methanol, ethanol, isopropanol, butanol, acetone and the like, and among these, ethanol is preferred. The amount of the aqueous organic solvent contained in the washing liquid S₂ is preferably 20 - 100 % by volume, more preferably 40 -80 % by volume.

It is preferred that the salt contained in the washing liquid S₂ be a salt of halide. Further, it is preferred that the salt have monovalent or divalent cation, and the salt be contained in an amount of 10 mM or more. It is more preferred that the salt be sodium chloride, and 20 mM or more of sodium chloride be contained.

Next, the recovery liquid, such as purified distilled water and TE buffer, is forced to flow from the first opening 143a of the barrel 140 to the nozzle 122 by pressurization, nucleic acid is removed from the nucleic acid-adsorptive porous membrane F and flown out, and then the recovery liquid discharged from the nozzle 122 (the recovery liquid containing nucleic acid) is collected.

Removal of nucleic acid is conducted while a volume of the recovery liquid is adjusted relative to a volume of the sample solution containing nucleic acid prepared from the specimen. The volume of the recovery liquid containing separated and purified nucleic acid depends on the volume of the specimen to be used. A volume of the recovery liquid typically used is from several tens to several hundreds of µl, though the volume of the recovery liquid may vary in the range from 1 µl to several tens of ml, when the volume of specimen is trace or when a large amount of nucleic acid is desired to be separated and purified.

It is preferred that pH of the recovery liquid be 2 - 11. It is more preferred that pH be 5 - 9. Since ionic strength and salt concentration especially have effects on elution of the adsorbed nucleic acid, the recovery liquid preferably has an ionic strength of 290 mmol/l or less, and preferably a salt concentration of 90 mmol/l or less. With these properties, recovery rate of nucleic acid is improved, and a larger amount of nucleic acid can be recovered.

The nucleic acid to be recovered may be deoxyribonucleic acid (DNA) or ribonucleic acid (RNA), and the nucleic acid may be single-stranded or double stranded.

Especially in the case where the nucleic acid to be recovered is RNA, it is desired that ribonuclease (RNase) be inactivated. Especially, it is desired that water to be used for preparing the washing liquid S₂ and the recovery liquid be treated with DEPC (diethyl pyrocarbonate).

The nucleic acid contained in the resultant recovery liquid has purities of 1.6- 2.0 and 1.8 - 2.2, in the case of DNA and RNA, respectively, when measured with an ultraviolet-visible spectrophotometer (260 nm/280 nm) . In other words, high-purity nucleic acid with less impurity can be constantly obtained. Furthermore, the nucleic acid having purities of approximately 1 . 8 and approximately 2.0, in the case of DNA and RNA, respectively, can be recovered, when measured with an ultraviolet-visible spectrophotometer (260 nm / 280 nm).

The cartridge for nucleic acid separation and purification 100 can be preferably used with the automated device as mentioned above, though the cartridge can also be used in a device which is manually operated. In this case, for a means to pressurize the sample solution or the like, an injector or a pipetter can be used. The injector or the pipetter can be removably connected to one of the openings (first opening 143a) of the cartridge for nucleic acid separation and purification 100.

### (Materials and the like for members)

As materials for the barrel 140 and the bottom member 120, plastics, such aspolypropylene, polystylene, polycarbonate and polyvinyl chloride, can be used. Biodegradable materials can also be preferably used. The barrel 140 and the bottom member 120 may be either transparent or colored.

As for the nucleic acid-adsorptive porous membrane F, a porous membrane that allows nucleic acid to be adsorbed with weak interaction which is not involved with ion binding is preferred. It is more suitable that the nucleic acid-adsorptive porous membrane F be a porous membrane having hydrophilic group, which may be a porous membrane made of a material having hydrophilic group, or a porous membrane made of a material to which hydrophilic group is introduced by treatment or coating. Material for porous membrane may be either organic or inorganic. Examples include: a porous membrane made of organic material having hydrophilic group; a porous membrane to which hydrophilic group is introduced by treating a porous membrane made of organic material having no hydrophilic group; a porous membrane to which hydrophilic group is introduced by coating a porous membrane made of organic material having no hydrophilic group with material having hydrophilic group; a porous membrane made of inorganic material having hydrophilic group; a porous membrane to which hydrophilic group is introduced by treating a porous membrane made of inorganic material having no hydrophilic group; a porous membrane to which hydrophilic group is introduced by coating a porous membrane made of inorganic material having no hydrophilic group with material having hydrophilic group. From the viewpoint of processability, it is preferred that material for the porous membrane be organic material, such as organic polymer.

As an example of the porous membrane having hydrophilic group, there can be mentioned a porous membrane formed of organic material having hydroxyl group. As an example of the organic material having hydroxyl group, there can be mentioned a surface saponification product of acetyl cellulose disclosed in the patent document 1 mentioned above. Examples of acetyl cellulose include monoacetyl cellulose, diacetyl cellulose and triacetyl cellulose, and among these, triacetyl cellulose is especially preferred. In this case, the amount (density) of the hydroxyl group on the surface of the solid phase can be controlled by degree of saponification (saponification degree). In order to improve nucleic acid separation efficiency, a larger amount (higher density) of hydroxyl group is preferred. For example, in the case of acetyl cellulose, such as triacetyl cellulose, the saponification rate is preferably 5 % or more, and more preferably 10 % or more. In addition, the amount (density) of hydroxyl group in the solid phase can be controlled by a combination of the degree of saponification (saponification degree) and the pore diameter of the porous membrane. In this case, the porous membrane may have symmetrical front/back sides, though the porous membrane which has asymmetrical front/back sides is suitably used.

As a porous membrane formed of organic material having hydroxyl group, a porous membrane made of organic polymer formed of a mixture of acetyl celluloses having different acetyl values is suitablyused. Especially, as the mixture of acetyl celluloses having different acetyl values, a mixture of triacetyl cellulose and diacetyl cellulose is suitably used. It is preferred that a mixing ratio of triacetyl cellulose and diacetyl cellulose be 99:1 - 1:99. It is more preferred that the mixing ratio of triacetyl cellulose and diacetyl cellulose be 90:10 - 50:50.

Examples of the mixture of acetyl celluloses having different acetyl values include a mixture of triacetyl cellulose and monoacetyl cellulose, a mixture of triacetyl cellulose, diacetyl cellulose and monoacetyl cellulose, and a mixture of diacetyl cellulose and monoacetyl cellulose.

In addition, as an example of a porous membrane formed of organic material having hydroxyl group, there can be mentioned a porous membrane formed of organic material obtained by saponification of a mixture of acetyl celluloses having different acetyl values. Preferable examples of the organic material obtained by saponification of a mixture of acetyl celluloses having different acetyl value include a saponification product of a mixture of triacetyl cellulose and diacetyl cellulose. It is preferred that a mixing ratio of triacetyl cellulose and diacetyl cellulose be 99:1 - 1:99. It is more preferred that the mixing ratio of triacetyl cellulose and diacetyl cellulose be 90:10 - 50:50.

Examples of organic material obtained by saponification of the mixture of acetyl celluloses having different acetyl value include a saponification product of a mixture of triacetyl cellulose and monoacetyl cellulose, a saponification product of a mixture of triacetyl cellulose, diacetyl cellulose and monoacetyl cellulose, and a saponification product of a mixture of diacetyl cellulose and monoacetyl cellulose.

For the nucleic acid-adsorptive porous membrane F, a porous membrane having a thickness of 10 - 500 µm is suitably used, and a porous membrane having a thickness of 50 - 250 µm is more suitably used.

For the nucleic acid-adsorptive porous membrane F, a porous membrane having a minimum pore diameter of 0.22 µm or more is suitably used, and a porous membrane having a minimum pore diameter of 0.5 µm or more is more suitably used. For the nucleic acid-adsorptive porous membrane F, a porous membrane having a ratio of a maximum pore diameter to a minimum pore diameter of 2 or more is suitably used, and a porous membrane having a ratio of a maximum pore diameter to a minimum pore diameter of 5 or more is more suitably used.

For the nucleic acid-adsorptive porous membrane F, a porous membrane having a void rate of 50 - 95 % is suitably used, and a porous membrane having a void rate of 65 - 80 % is more suitably used. For the nucleic acid-adsorptive porous membrane F, a porous membrane having a bubble point of 9.8 - 980 kPa (0.1 - 10 kgf/cm²) is suitably used, and a porous membrane having a bubble point of 19.6 - 392 kPa (0.2 - 4 kgf/cm²) is more suitably used.

For the nucleic acid-adsorptive porous membrane F, a porous membrane with a pressure loss of 0.1 - 100 kPa is suitably used, and a porous membrane with a pressure loss of 0.5 - 50 kPa is more suitably used. The expression "pressure loss" means a minimum pressure required to pass water through the membrane per membrane thickness of 100 µm.

For the nucleic acid-adsorptive porous membrane F, a porous membrane that can adsorb 0.1 µg or more of nucleic acid per 1 mg of the porous membrane is suitably used, and a porous membrane that can adsorb 0.9 µg or more of nucleic acid per 1 mg of the porous membrane is more suitably used.

### [Second embodiment]

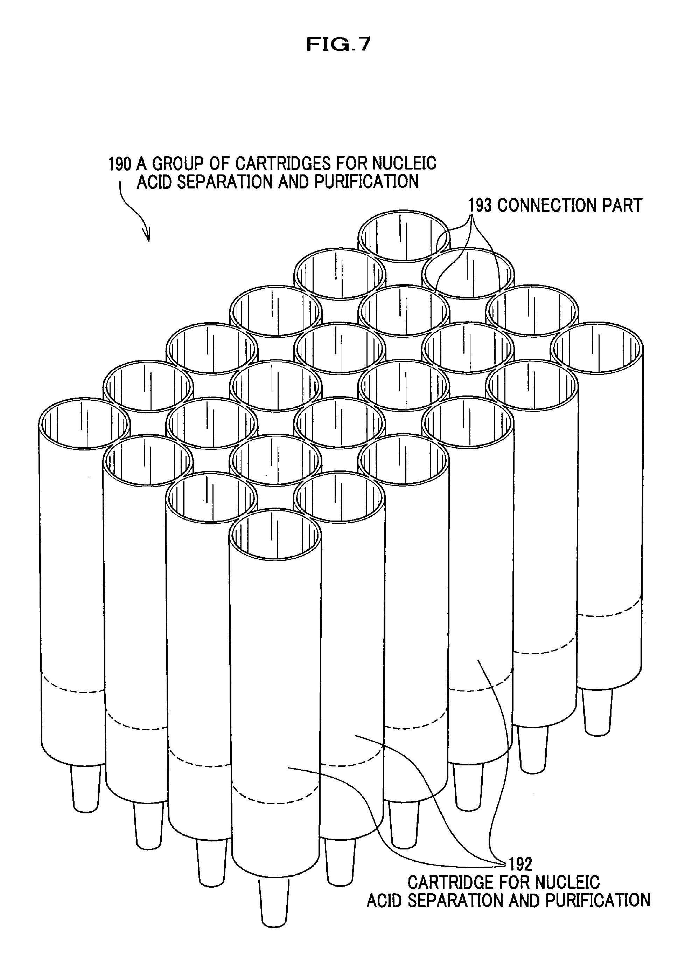

Next, a second embodiment of the present invention will be explained below. FIG. 7 to be referred is a perspective view of a group of cartridges for nucleic acid separation and purification according to the second embodiment.

As shown in FIG. 7, the group of cartridges for nucleic acid separation and purification 190 is integrally formed of a number of cartridges for nucleic acid separation and purification 192.

Each of the cartridge for nucleic acid separation and purification 192, which is a component of the group of cartridges for nucleic acid separation and purification 190, has almost the same structure as that of the cartridge for nucleic acid separation and purification 100 explained in relation to the first embodiment, except that the cartridges 192 are connected to one another at portions (connection parts 193) contacting with adjacent cartridges 192.

The group of cartridges for nucleic acid separation and purification 190 is produced by using an injection molding die (not shown) having a plurality of cavities 151 (see FIG. 3) communicating with one another. Therefore, pressure of the resin J applied to the rim parts Fa of a number of the nucleic acid-adsorptive porous membranes F placed in a number of the cavities 151 becomes even. As a result, breakage or poor sealing of the membranes F, which may occur due to irregularity in pressure applied to the membranes F, can be prevented, and thus a number of cartridges for nucleic acid separation and purification 192 (i.e. the group of cartridges for nucleic acid separation and purification 190) can be effectively produced at the same time.

Though the cartridges for nucleic acid separation and purification of the present invention were described with reference to the first and second embodiments, the present invention is not limited to these embodiments. For example, in the group of cartridges for nucleic acid separation and purification 190 according to the second embodiment, the cartridges for nucleic acid separation and purification 192 are directly connected to one another. However, with use of an injection molding die having cavities communicating with one another through runners, a structure in which the cartridges 192 are not directly connected to one another can be obtained. Likewise, with respect to the cartridge for nucleic acid separation and purification 100 according to the first embodiment, a number of cartridges 100 may be produced by molding a group of cartridges using a molding die having cavities communicating with one another through runners, and then cutting away the runners.

### [Third embodiment]

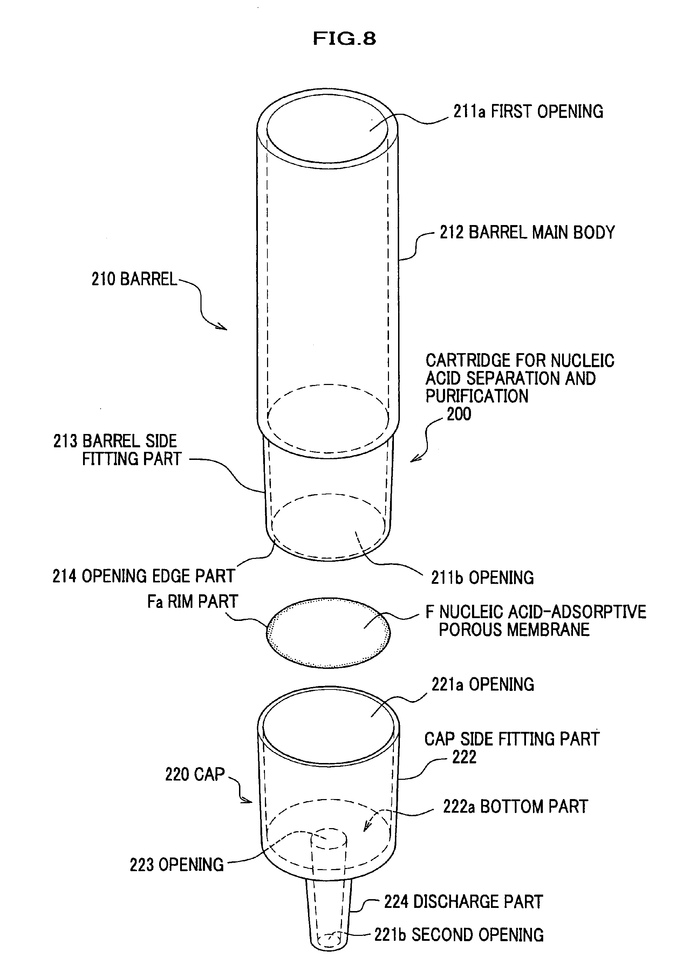

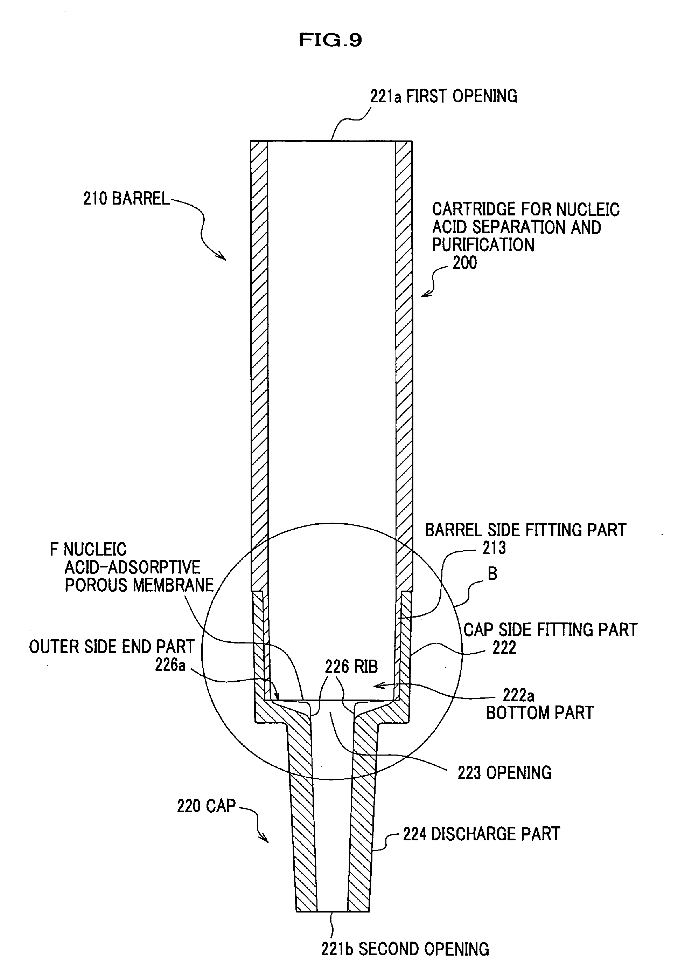

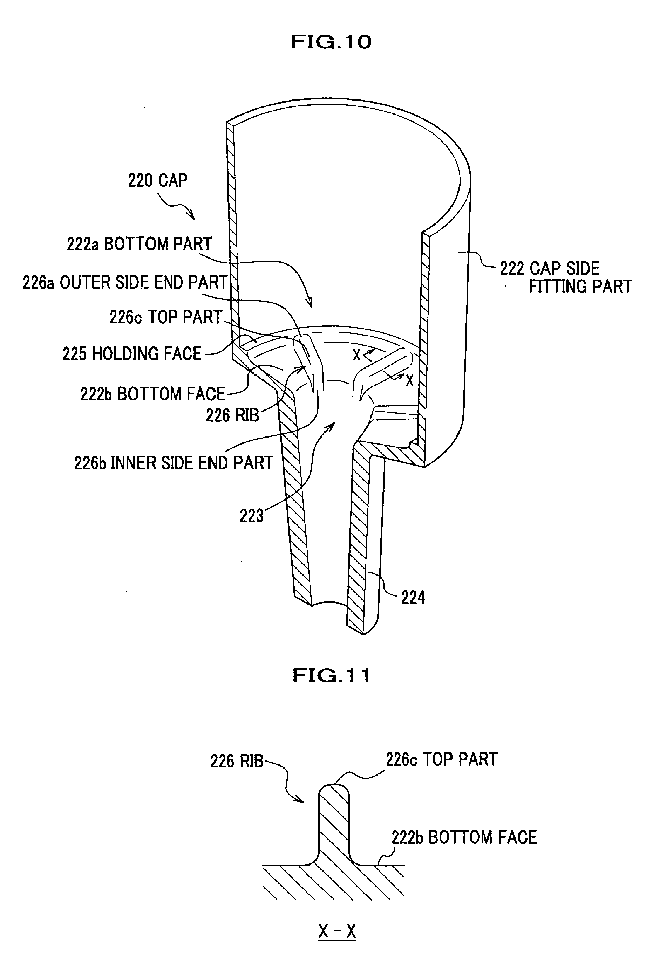

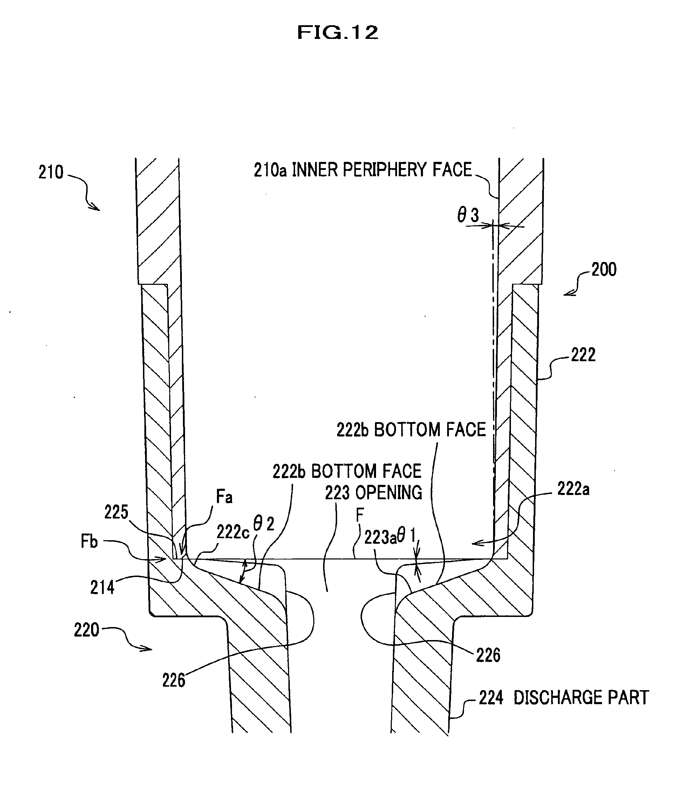

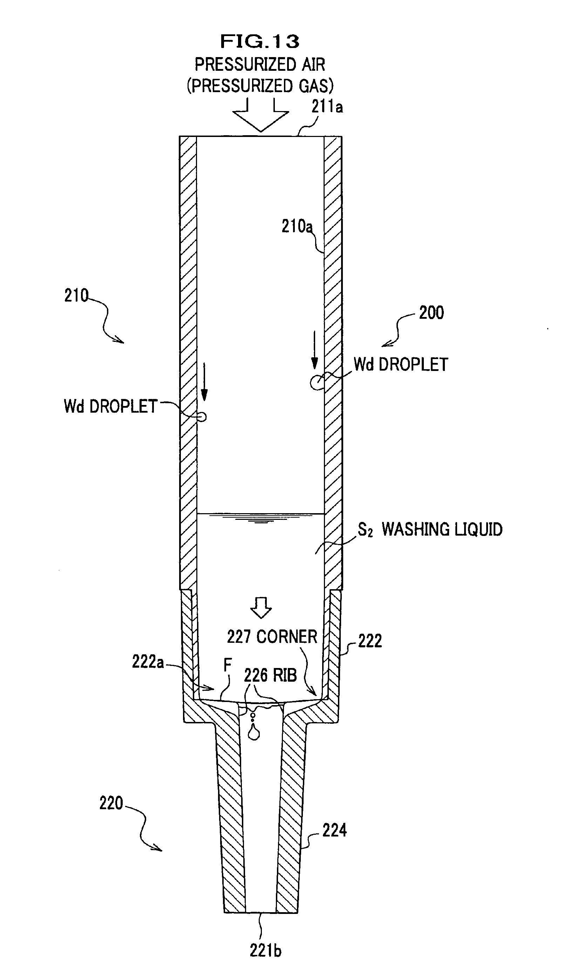

Next, a third embodiment of the present invention will be explained below with reference to the drawings. FIG. 8 is an exploded perspective view of a cartridge for nucleic acid separation and purification according to a third embodiment of the present invention. FIG. 9 is a cross-sectional view of the cartridge for nucleic acid separation and purification according to the third embodiment of the present invention. FIG. 10 is an enlarged sectional perspective view of a cap used in the third embodiment of the present invention'. FIG. 11 is a cross-sectional view along line X-X in FIG. 10. FIG. 12 is an enlarged view of an area B in FIG. 9. FIG. 13 is a cross-sectional view of the cartridge for nucleic acid separation and purification according to the third embodiment of the present invention during washing step. In the following descriptions, the expressions "upper" and "lower" are based on the direction in FIG. 9.

As shown in FIG. 8, a cartridge for nucleic acid separation and purification 200 according to the third embodiment of the present invention includes a nucleic acid-adsorptive porous membrane F, and a cylindrical barrel 210 and a cap 220, which together hold the nucleic acid-adsorptive porous membrane F and provide a channel for a liquid.

### (Barrel 210)

The barrel 210 is formed of a barrel main body 212 in a shape of a cylinder and a barrel side fitting part 213 in a shape of a cylinder contiguous to the barrel main body 212. An upper portion of the barrel main body 212 has a first opening 211a, and a lower portion of the barrel side fitting part 213 has an opening 211b. Therefore, a liquid is allowed to flow from an upper side to a lower side of the barrel 210. An outer diameter of the barrel side fitting part 213 is made slightly smaller than an outer diameter of the barrel main body 212.

### (Cap 220)

The cap 220 is formed of a cap side fitting part 222 in a shape of a cylinder and a discharge part 224 contiguous to an opening 223 formed in a bottom part 222a of the cap side fitting part 222. The opening 223, which is one example of the bottom part opening formed in the bottompart 222a, has a smaller diameter than a diameter of the first opening 211a formed in the upper portion of the barrel main body 212. An upper portion of the cap side fitting part 222 has an opening 221a, and a lower portion of the discharge part 224 has a second opening 221b. Therefore, liquids are allowed to flow from an upper side to a lower side of the cap 220. In addition, the cap side fitting part 222 is formed so that an inner diameter of the cap side fitting part 222 corresponds to an outer diameter of the barrel side fitting part 213 of the barrel 210.

As shown in FIG. 9, the barrel side fitting part 213 of the barrel 210 is fitted into the cap side fitting part 222 of the cap 220 while the nucleic acid-adsorptive porous membrane F is placed in the bottom part 222a of the cap side fitting part 222 of the cap 220, to thereby sandwich and hold the membrane F between the barrel 210 and the cap 220. It should be noted that a "cylindrical main body" is composed of the barrel 210 and the cap side fitting part 222.

As shown in FIG. 10, the cap 220 has six ribs 226 (though only three ribs are shown in the drawing) radially formed on the bottom face 222b of the cap side fitting part 222. When the cartridge for nucleic acid separation and purification 200 has been assembled, an outer side end part 226a of a top part 226c of each of the ribs 226 is brought into contact with the nucleic acid-adsorptive porous membrane F, and supports the nucleic acid-adsorptive porous membrane F (see FIG. 9). In addition, in order to make a closer portion of the nucleic acid-adsorptive porous membrane F to the opening 223 more displaced towards the discharge part 224 during use of the cartridge for nucleic acid separation and purification 200, the rib 226 slopes down to the discharge part 224, in a direction from the outer side end part 226a to an inner side end part 226b. Moreover, along a whole outer circumference of a bottom face 222b, a holding face 225 which is one step higher than the bottom face 222b is formed in such manner that the holding face 225 becomes contiguous to the outer side end part 226a of the rib 226. The holding face 225 is configured to hold the membrane F with an opening edge part 214, which is an edge part of an opening 211b of the barrel 210 (see FIG. 8). It is preferred that a width of the holding face 225 be made so as to fit a width of the opening edge part 214. It should be noted that the rib 226 is merely one example of the "protrusion", and the "protrusions" are not necessarily in a form of ribs, and for example, they may be a plurality of projections dispersed.

### (Rib 226)

Since the ribs 226 are radially formed, a liquid smoothly flows into the discharge part 224 when the liquid is flowed from the upper side to the lower side.

Since the top part 226c of the rib 226 slopes down to the discharge part 224 in the direction from the outer side end part 226a to the inner side end part 226b, when a washing liquid S₂ (see FIG. 13), which will be described below, is forced to flow by pressurized gas during washing step, the nucleic acid-adsorptive porous membrane F is deformed into a convex shape protruding towards the discharge part 224, along the top part 226c of the rib 226. For this reason, the washing liquid S₂ is rapidly discharged from the discharge part 224 without remaining on the bottom part 222a. A slope angle θ1 of the rib 226 in a radial direction of the cap side fitting part 222 (see FIG. 12) is preferably 3° or more, more preferably 5° or more.

As shown in FIG. 11, when seen as a traverse section, a top part 226c of the rib 226 is rounded. With this configuration, the washing liquid S₂ is prevented from remaining between the top part 226c of the rib 226 and the nucleic acid-adsorptive porous membrane F, and the washing liquid S₂ is more rapidly discharged. The curvature radius of the top part 226c of the rib 226 is preferably 1/4 or more, more preferably 1/3 or more, most preferably 1/2 or more of the width of the rib 226.

### (Cross-sectional shape of the cartridge for nucleic acid separation and purification 200)

Next, referring to FIG. 12, a cross-sectional shape of the cartridge for nucleic acid separation and purification 200 will be described. As shown in FIG. 12, the bottom face 222b of the cap side fitting part 222 has a slope in such manner that a closer portion to the opening 223 is displaced more towards the discharge part 224. With this configuration, the washing liquid S₂ is more rapidly discharged. A slope angle θ2 of the bottom face 222b in a radial direction of the cap side fitting part 222 is preferably 10° or more, more preferably 15° or more, most preferably 20° or more.

As shown in FIG. 12, edges (for example, an edge 223a of the opening 223 and the like) and corners (for example, an outer rim part 222c of the bottom face 222b) present in the inner surface of the cartridge for nucleic acid separation and purification 200 are rounded. With this configuration, the washing liquid S₂ is prevented from remaining on the edges and the corners present in the inner surface, and the washing liquid S₂ is more rapidly discharged. The curvature radius of the edge is preferably 0.1 mm or more, more preferably 0.2 mm or more, most preferably 0.3 mm or more. The curvature radius of the corner is preferably 0.1 mm or more, more preferably 0.15 mm or more, most preferably 0.2 mm or more.

In addition, an angle θ3 formed by an axis of the barrel 210 and an inner periphery face 210a of the barrel 210 is preferably 10° or less, more preferably 5° or less. With this configuration, the washing liquid S₂ is easily run down along the inner periphery face 210a of the barrel 210, and the washing liquid S₂ is more rapidly discharged.

In addition, the nucleic acid-adsorptive porous membrane F is held between the opening edge part 214 of the barrel 210 and the holding face 225 of the cap 220, with the rim part Fa being compressed. With this configuration, liquids (sample solution or the like) which are to pass through the membrane F are prevented from leaking from the side Fb of the membrane F. In order to stably hold the membrane F, it is preferred that the opening edge part 214 and the holding face 225 be adhered by an ultrasonic welder or the like.

With respect to the materials for the barrel 210, the cap 220 and the nucleic acid-adsorptive porous membrane F, explanation is omitted here since they are explained in relation to the first embodiment. Likewise, with respect to the steps for separating and purifying nucleic acid from the sample containing nucleic acid by using the cartridge for nucleic acid separation and purification 200 and an automated device performing these steps, explanation is omitted here since they are explained in relation to the first embodiment.

### (Action and effect of the cartridge for nucleic acid separation and purification 200)

Next, action and effect of the cartridge for nucleic acid separation and purification 200 are explained.

First, a sample solution containing nucleic acid is forced to flow from the first opening 211a of the barrel 210 (see FIG. 9) to the second opening 221b of the discharge part 224 by pressurized air. As a result, the nucleic acid in the sample solution is adsorbed to the nucleic acid-adsorptive porous membrane F.

Next, as shown in FIG. 13, the washing liquid S₂ is forced to flow from the first opening 211a of the barrel 210 to the second opening 221b of the discharge part 224 by pressurized air. The washing liquid S₂ has a composition that removes impurities without removing the nucleic acid adsorbed to the nucleic acid-adsorptive porous membrane F. During the washing step, when washing liquid S₂ is forced to flow by pressurized air, the nucleic acid-adsorptive porous membrane F is deformed into a convex shape protruding towards the discharge part 224, along the slope of the rib 226, as shown in FIG. 13. For this reason, the washing liquid S₂ is rapidly discharged from the discharge part 224 without remaining on the bottom part 222a, especially at a corner 227 formed by the nucleic acid-adsorptive porous membrane F and the inner periphery face 210a of the barrel 210.

In a case where the contact angle formed between the inner wall surface (inner periphery face 210a and the like of the barrel 210) of the cartridge for nucleic acid separation and purification 200 and a droplet Wd of the washing liquid S₂ is 90° or more, even when the washing liquid S₂ remains in a form of droplet Wd on the inner periphery face 210a of the barrel 210, for example as shown in FIG. 13, the washing liquid S₂ can be easily removed by pressurized air, since the droplet Wd is in nearly a spherical shape due to surface tension. For this reason, the washing liquid S₂ is more rapidly discharged.

When the contact angle formed between the inner wall surface of the cartridge for nucleic acid separation and purification 200 and the droplet Wd of the washing liquid S₂ is 80° or less, wettability for the washing liquid S₂ of the inner wall surface of the cartridge for nucleic acid separation and purification 200 is enhanced, and it becomes difficult for the washing liquid S₂ to remain in a form of droplet Wd. Accordingly, the washing liquid S₂ is more rapidly discharged.

For comparison, separation and purification were conducted using the cartridge in which the slope angle θ1 of the rib 226 in a radial direction of the cap side fitting part 222 (see FIG. 12) was 0° , the concentration of ethanol in the discharged recovery liquid exceeded 4 % by volume. When PCR and reverse transcriptase reaction were conducted with this discharged recovery liquid, yield was lowered.

As shown above, in the cartridge for nucleic acid separation and purification 200 of this embodiment, during washing step, the washing liquid S₂ is rapidly discharged without remaining in the cartridge for nucleic acid separation and purification 200. Therefore, the discharged recovery liquid is prevented from being contaminated with the washing liquid S₂. As a result, troubles which would otherwise be caused by the washing liquid S₂ in subsequent steps can be prevented beforehand.

In the third embodiment, the cylindrical body is prepared by engaging the barrel with the cap. However, the present invention is not limited to this configuration. For example, a cylindrical body may be prepared by integrally forming a barrel and a cap together, by placing a cap in a mold and conducting insert molding to form the barrel part.

### [Fourth embodiment]

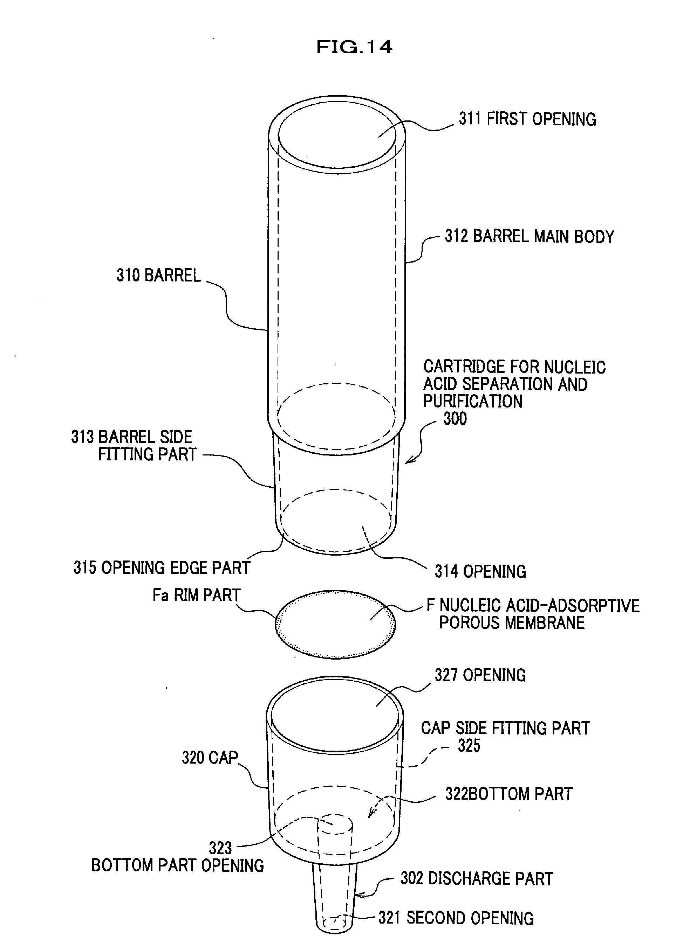

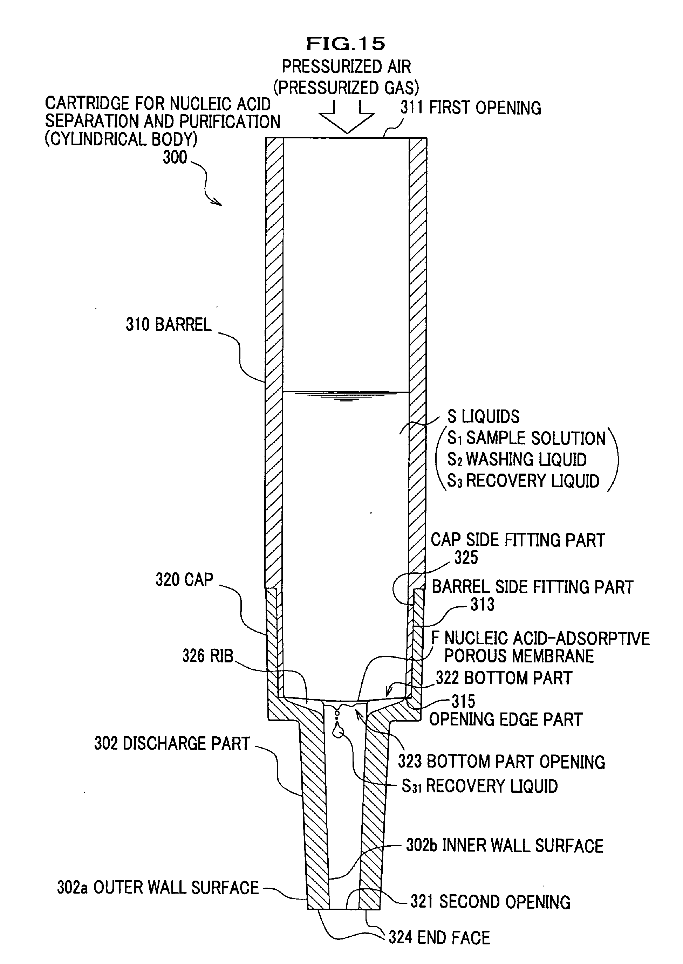

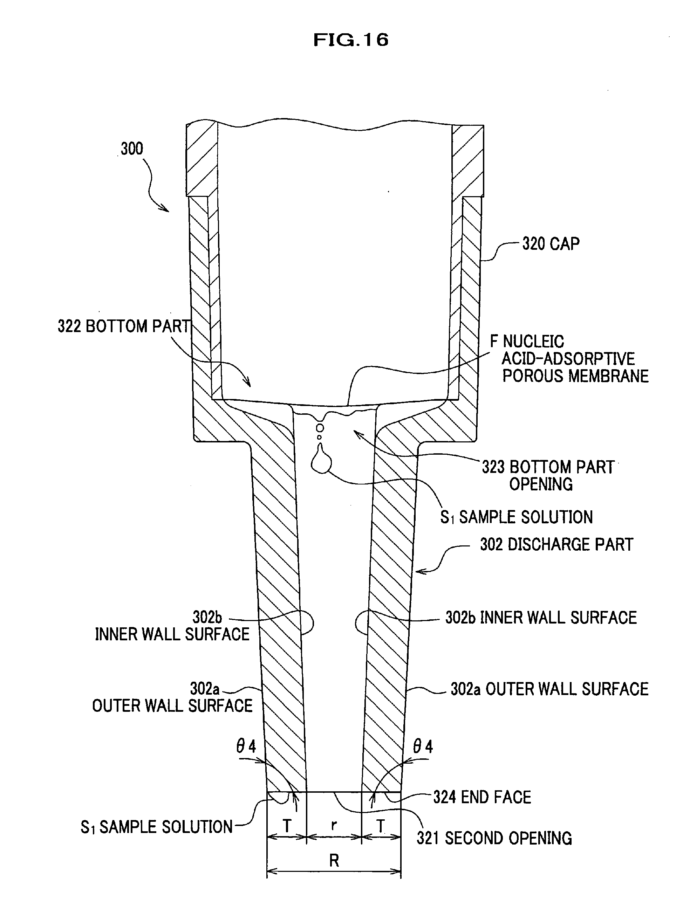

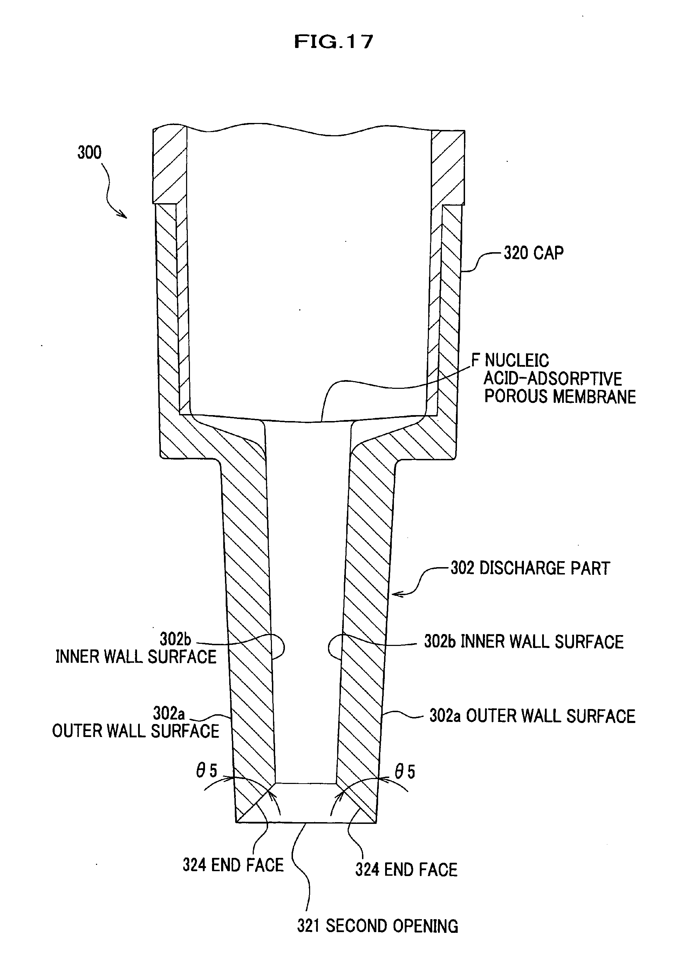

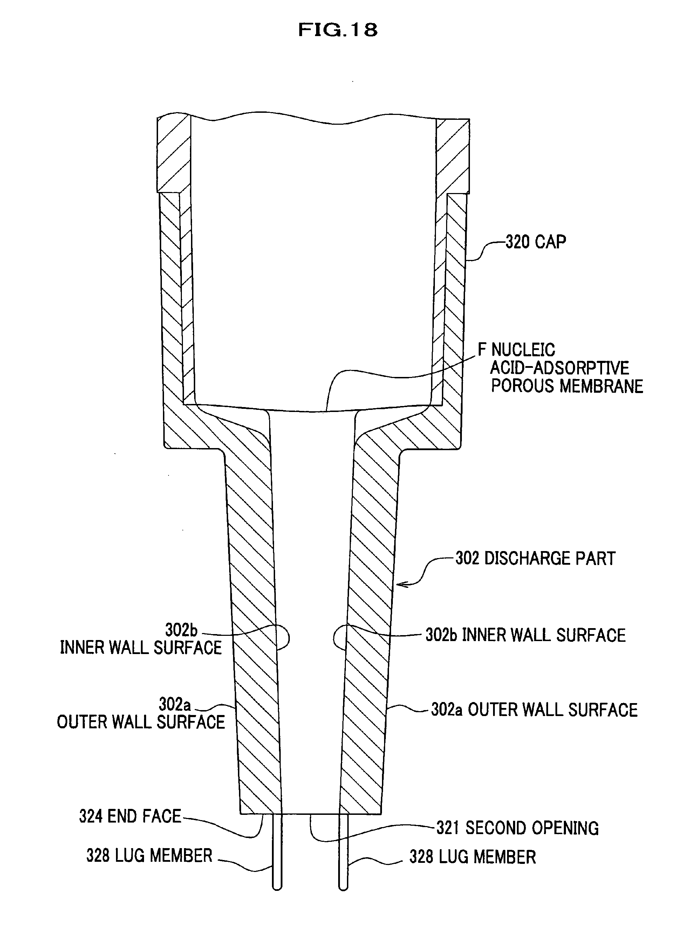

Next, a fourth embodiment of the cartridge for nucleic acid separation and purification of the present invention will be explained below with reference to the drawings. FIG. 14 is an exploded perspective view of a cartridge for nucleic acid separation and purification according to the fourth embodiment of the present invention. FIG. 15 is a cross-sectional view of the cartridge for nucleic acid separation and purification according to the fourth embodiment of the present invention. FIG. 16 is an enlarged sectional view of a discharge part of the cartridge for nucleic acid separation and purification according to the fourth embodiment of the present invention. FIG. 17 is an enlarged sectional view of a discharge part of a cartridge for nucleic acid separation and purification according to a fifth embodiment of the present invention. FIG. 18 is an enlarged sectional view of a discharge part of a cartridge for nucleic acid separation and purification according to a sixth embodiment of the present invention. In the following descriptions, the expressions "upper" and "lower" are based on the use condition of the cartridge for nucleic acid separation and purification, specifically the condition as shown in FIG. 15.

### (Configuration of the cartridge for nucleic acid separation and purification 300)

First, referring to FIG. 14 and FIG. 15, a whole configuration of the cartridge for nucleic acid separation and purification 300 according to the fourth embodiment will be explained below.

The cartridge for nucleic acid separation and purification 300 according to the fourth embodiment of the present invention includes a nucleic acid-adsorptive porous membrane F, and a barrel 310 and a cap 320, which together hold the nucleic acid-adsorptive porous membrane F and provide a channel for liquids.

Next, referring to the exploded perspective view of FIG. 14, each component will be described below in detail.

### (Barrel 310)

The barrel 310 is formed of a barrel main body 312 in a shape of a cylinder and a barrel side fitting part 313 in a shape of a cylinder contiguous to the barrel main body 312. An upper portion of the barrel main body 312 has a first opening 311, and a lower portion of the barrel side fitting part 313 has an opening 314. Therefore, liquids S (see FIG. 15) are allowed to flow from an upper side to a lower side of the barrel 310. An outer diameter of the barrel side fitting part 313 is made slightly smaller than an outer diameter of the barrel main body 312.

### (Cap 320)

The cap 320 is formed of a cap side fitting part 325 in a shape of cylinder and a discharge part 302 contiguous to a bottom part opening 323 formed in a bottom part 322 of the cap side fitting part 325. The bottom part opening 323 formed in the bottom part 322 has a smaller diameter than a diameter of the first opening 311 formed in the upper portion of the barrel main body 312. An upper portion of the cap side fitting part 325 has an opening 327, and a lower portion of the discharge part 302 has a second opening 321. Therefore, liquids are allowed to flow from an upper side to a lower side of the cap 320. In addition, the cap side fitting part 325 is formed so that an inner diameter of the cap side fitting part 325 can fit with an outer diameter of the barrel side fitting part 313 of the barrel 310.

As shown in FIG. 15, the barrel side fitting part 313 of the barrel 310 is fitted into the cap side fitting part 325 of the cap 320 while the nucleic acid-adsorptive porous membrane F is placed in the bottom part 322 of the cap side fitting part 325 of the cap 320, to thereby sandwich and hold the membrane F between the barrel 310 and the cap 320. In addition, in the bottom part 322 of the cap 320, at least three, preferably six ribs 326 are radially formed. The edge of the rib 326 slopes down to the bottom part opening 323 formed at the center of the bottom part 322 of the cap side fitting part 325.

It should be noted that the barrel 310, the cap side fitting part 325 and the bottom part 322 forms a "cylindrical main body". The discharge part 302 which is a cylinder connects the bottom part opening 323 of the cap 320 and the second opening 321 corresponds to a "discharge part", and the cylinder formed of the cylindrical main body and the discharge part corresponds to a "cylindrical body".

### (Configuration of the discharge part 302 and the end face 324)

Next, preferable configuration of the discharge part 302 and the end face 304 of the discharge part 302 of the cartridge for nucleic acid separation and purification 300 according to the fourth embodiment of the present invention will be described below in detail, referring to FIGs. 14, 15, 16 and 17.

As shown in the enlarged sectional view of FIG. 16, the discharge part 302 of the cartridge for nucleic acid separation and purification 300 forms a lower half of the cap 320. One end of the discharge part 302 is contiguous to the bottom part opening 323 of the bottom part 322 of the cylindrical main body, and the other end is in a form of cylinder having the second opening 321 to discharge a waste liquid. With this configuration, the waste liquid can be accurately led to a waste liquid container 400 (see FIG. 20) disposed below the nucleic acid-adsorptive porous cartridge 300. This configuration is especially effective for preventing contamination of other sample solutions when a number of nucleic acid-adsorptive porous cartridges 300 are used with an automated device which will be described below.

It is preferred that the thickness T of an end face 324, which is a part forming the second opening 321 of the cap 320, be made 0.2 mm or more. When the thickness T of the part forming the second opening 321 is made 0.2 mm or more, even in the case where bubbles in the sample solution S₁ (see FIG. 15) are agitated by swirling air, the bubbles are prevented from moving over the thickness T of the part forming the second opening 321 and attaching to an outer wall surface 302a of the discharge part 302. Since more reliable effect can be obtained with larger thickness T, it is more preferred that the thickness T be 0.5 mm or more.

In the cartridge for nucleic acid separation and purification 300, it is preferred that an opening diameter r of the second opening 321 of the cap 320 be made 1.0 mm or more. When the opening diameter r is made 1.0 mm or more, the waste liquid is smoothly discharged.

Moreover, it is preferred that the outer diameter R of the end face 324 of the cap 320 be formed 1.4 mm or more. When the outer diameter R of the end face 324 of the discharge part 302 is made 1.4 mm or more, the above-mentioned thickness T can be set at 0.2 mm or more, and at the same time, high strength of the part forming the second opening 321 can be designed to be an adequate level. For these reasons, it is more preferred that the outer diameter R be 2.0 mm or more.

Next, referring to FIGs. 16 and 17, shapes of the discharge part 302 and the end face 324 of the cap 320 will be explained below.

In the discharge part 302 of the cap 320, it is preferred that an angle θ4 formed by the end face 324 and the outer wall surface 302a be made 105° or less. With this configuration, even when bubbles are attached to the outer wall surface 302a, the bubbles are accumulated in the vicinity of the second opening 321, and therefore these bubbles can be removed by the washing liquid S₂. The angle θ4 formed with an outer wall surface 302a of the discharge part 302 is preferably 100° or less, more preferably 95° or less.

### [Fifth embodiment]

As an alternative of the fourth embodiment of the cartridge for nucleic acid separation and purification of the present invention, the end face 324 of the discharge part 302 may be in a shape of a funnel with a portion closer to the second opening 321 having a larger opening diameter r, as shown in FIG. 17. With this configuration, the outer edge part of the second opening 321 forms an acute angle with the outer wall surface 302a, and as a result, even when air swirls up from the lower part, bubbles are prevented from moving over the outer edge and attaching to the outer wall surface 302a.

In this case, it is preferred that an angle θ5 formed by the end face 324 and the outer wall surface 302a of the discharge part 302 be made 30° or more (see FIG. 17). When the angle is below 30°, the sample solution S₁ gathers at the outer edge part of the end face 324, and securing the thickness T determined as described above becomes meaningless.

It is preferred that resin hydrophilicity of the end face 324 and the outer wall surface 302a be enhanced. In other words, it is preferred that the material for the cartridge for nucleic acid separation and purification 300 be easily wet. By making the end face 324 and the outer wall surface 302a hydrophilic, it becomes possible to suppress repellency of the washing liquid S₂, and at the same time, to remove the bubbles by the washing liquid S₂.

Taking into consideration dischargeability of the barrel 310 and the inner wall surface 302b of the cap 320 of the cartridge for nucleic acid separation and purification 300, it is preferred that the inner wall surface 302b have water-repellent property, and thus that a cartridge for nucleic acid separation and purification 300 be produced using a hydrophobic synthetic resin.

In the cartridge for nucleic acid separation and purification 300 made of the hydrophobic synthetic resin, hydrophilicity of the end face 324 and the outer wall surface 302a of the cap 320 can be enhanced by the following treatment.

First, polystylene, which is a hydrophobic synthetic resin, is used for injection molding to thereby produce a precursor of the cap 320 with the second opening 321 side being closed. At this time, if necessary, a shape of the second opening 321 is processed as desired, as described above. Next, the end face 324 of the cap 320 and the outer wall surface 302a (preferably a part of the outer wall surface 302a in the vicinity of a part which will be the second opening 321) are subjected to plasma treatment, to thereby enhance hydrophilicity of the end face 324 and the outer wall surface 302a. As a result, a cap 320 is obtained in which the inner wall surface 302b has a high water repellency, and the outer wall surface 302a of the discharge part 302 and the end face 324 have a high hydrophilicity.

It should be noted that, even in the case of the cartridge for nucleic acid separation and purification 300 in which the cap 320 and the barrel 310 are integrally formed, hydrophilicity of the end face 324 and the outer wall surface 302a can be enhanced by substantially the same treatment as described above.

The process for enhancing hydrophilicity is not limited to the above-described plasma treatment, and agents that can enhance hydrophilicity by modifying a surface of a hydrophobic synthetic resin can be used as well. In other words, the cap 320 in which hydrophilicity of the outer wall surface 302a and the end face 324 are enhanced can be obtained by treating the end face 324 and the outer wall surface 302a of the cap 320 prepared by injection molding, with the above-mentioned agents.

### [Sixth embodiment]

In a sixth embodiment of the cartridge for nucleic acid separation and purification of the present invention, as shown in FIG. 18, it is preferred that an end face 324 of a cap 320 be provided with lug members 328 for guiding bubbles. It is more preferred that each lug member 328 have a shape of a rod. It is further preferred that an inner side of each lug member 328 be flush with an inner wall surface 302b. With this configuration, bubbles at a second opening 321 are easily led along the rod-shaped lug members 328 extending from the inner wall surface 302b, and are easily accumulated at the tip of the rod-shaped lug members 328 further below a position of the second opening 321. Since the accumulated bubbles easily drop into a waste liquid container 400, the bubbles are prevented from attaching to an outer wall surface 302a.

It should be noted that there is no limitation with respect to the number of the rod-shaped lug members 328, as long as the above-mentioned purpose is attained, and the number may be arbitrarily selected between 1 and a plural number.

Next, referring to FIG. 15 again, since the ribs 326 are radially formed, a liquid smoothly flows into the discharge part 302 when the liquid flows from the upper side to the lower side.

Since the ribs 326 slope down to the bottom part opening 323, when a liquid S is pressurized from the first opening 311 side of the barrel 310, the nucleic acid-adsorptive porous membrane F is deformed into a convex shape protruding towards the bottom part opening 323, along the slope shape of the rib 326. For this reason, the liquid S is rapidly discharged from the bottom part opening 323 without remaining on the bottom part 322.

With respect to the materials for the barrel 310, the cap 320 and the nucleic acid-adsorptive porous membrane F, explanation is omitted here since they are explained in relation to the first embodiment. Likewise, with respect to the steps for separating and purifying nucleic acid from the sample by using the cartridge for nucleic acid separation and purification 300 and an automated device performing this steps, explanation is omitted here since they are explained in relation to the first embodiment.

The best modes for carrying out the cartridge for nucleic acid separation and purification according to the present invention have been explained. However, the present invention is not limited to the particular embodiments discussed above. For example, in the above-mentioned embodiment, the cartridge for nucleic acid separation and purification contains a single nucleic acid-adsorptive porous membrane, though it may contain a plurality of the nucleic acid-adsorptive porous membranes. In this case, a plurality of membranes to be contained may be the same or different from one another.

## Claims

1. A cartridge for nucleic acid separation and purification which comprises: a cylindrical main body formed of a cylindrical part and a bottom part having an opening; and a nucleic acid-adsorptive porous membrane held on the bottom part,
a rim part of the nucleic acid-adsorptive porous membrane being held by a molding material forming the cylindrical part of the cylindrical main body,
which cartridge is produced by:
inserting a bottom member and the nucleic acid-adsorptive porous membrane into a cavity of an injection molding die wherein the nucleic acid-adsorptive porous membrane is placed in the bottom member providing the bottom part which is one of two parts that sandwich and hold the nucleic acid-adsorptive porous membrane; and
injecting the molding material into the cavity to form the cylindrical part of the cylindrical main body whierein a portion forming the cylindrical part which is the other of the two parts that sandwich and hold the nucleic acid-adsorptive porous membrane is integrated with the bottom member while the nucleic acid-adsorptive porous membrane is sandwiched and held between the cylindrical part and the bottom part.

2. The cartridge for nucleic acid separation and purification according to Claim 1, wherein the bottom member further comprises a cylindrical discharge part communicating with the opening of the bottom part.

3. The cartridge for nucleic acid separation and purification according to Claim 1, wherein the rim part of the nucleic acid-adsorptive porous membrane is held and compressed by injection pressure of the molding material forming the cylindrical part of the cylindrical main body.

4. The cartridge for nucleic acid separation and purification according to Claim 3, wherein the rim part of the nucleic acid-adsorptive porous membrane is compressed until voids in the membrane disappear.

5. The cartridge for nucleic acid separation and purification according to Claim 3, wherein the rim part of the nucleic acid-adsorptive porous membrane is compressed to a thickness of 10% to 70% of an initial thickness.

6. A method for producing a cartridge for nucleic acid separation and purification which comprises: a cylindrical main body formed of a cylindrical part and a bottom part having an opening; and a nucleic acid-adsorptive porous membrane held on the bottom part, comprising:
a step of placing the nucleic acid-adsorptive porous membrane on the bottom part provided in a bottom member, and
placing the bottom member and the nucleic acid-adsorptive porous membrane in a cavity of an injection molding die;
a step of pressing a core pin to the nucleic acid-adsorptive porous membrane while holding the nucleic acid-adsorptive porous membrane with a rim part of the nucleic acid-adsorptive porous membrane protruding from a periphery of an end face of the core pin, and closing the injection molding die;
a step of injecting a molding material into the cavity, forming the cylindrical part of the cylindrical main body, and at the same time sandwiching and holding the rim part of the nucleic acid-adsorptive porous membrane between the molding material and the bottom part; and
a step of removing a casting from the injection molding die.

7. The method for producing a cartridge for nucleic acid separation and purification according to Claim 6, wherein the core pin compresses and holds the nucleic acid-adsorptive porous membrane so that a thickness of the nucleic acid-adsorptive porous membrane becomes 10% to 70% of an initial thickness.

8. The method for producing a cartridge for nucleic acid separation and purification according to Claim 6, wherein an end part of the core pin is in a cone shape which tapers from a circular rim to a center of the end part.

9. The method for producing a cartridge for nucleic acid separation and purification according to Claim 6, wherein the rim part of the nucleic acid-adsorptive porous membrane protruding from the periphery of the end face of the core pin is compressed by injection pressure of the molding material injected into the cavity until voids inside are collapsed.

10. The method for producing a cartridge for nucleic acid separation and purification according to Claim 6, wherein the rim part of the nucleic acid-adsorptive porous membrane protruding from the periphery of the end face of the core pin is compressed to a thickness of 10% to 70% of an initial thickness by injection pressure of the molding material injected into the cavity.

11. The method for producing a cartridge for nucleic acid separation and purification according to Claim 6 capable of producing a number of cartridges for nucleic acid separation and purification at the same time, wherein
the injection molding die has a plurality of cavities;
the bottom member with the nucleic acid-adsorptive porous membrane being placed therein is inserted in each of the plurality of cavities; and
the plurality of cavities communicate with one another.

12. A cartridge for nucleic acid separation and purification comprising a cylindrical body with a first opening and a second opening and having a nucleic acid-adsorptive porous membrane held in the cylindrical body, in which separation and purification of nucleic acid are conducted by passing a sample solution containing nucleic acid by pressurized gas from the first opening to the second opening to allow the nucleic acid to be adsorbed to the nucleic acid-adsorptive porous membrane, wherein:
the cylindrical body comprises: a cylindrical main body having a bottom part supporting the nucleic acid-adsorptive porous membrane; and a discharge part connecting a bottom part opening formed in the bottom part and the second opening;
the bottom part has a bottom face and a plurality of protrusions formed on the bottom face;
at least a part of a top part of each protrusion supports the nucleic acid-adsorptive porous membrane; and
a closer portion of the nucleic acid-adsorptive porous membrane to the bottom part opening is made more displaced towards the discharge part during use.

13. The cartridge for nucleic acid separation and purification according to Claim 12, wherein the plurality of protrusions are a plurality of ribs radially extending from the bottom part opening.

14. The cartridge for nucleic acid separation and purification according to Claim 13, wherein the top part of the rib is rounded.

15. The cartridge for nucleic acid separation and purification according to Claim 12, wherein the bottom face has a slope so that a closer portion of the bottom face to the bottom part opening is displaced more towards the discharge part.

16. The cartridge for nucleic acid separation and purification according to Claim 12, wherein edges and corners present in an inner surface of the cartridge for nucleic acid separation and purification are rounded.

17. The cartridge for nucleic acid separation and purification according to Claim 12, wherein the nucleic acid-adsorptive porous membrane is held with a rim part thereof being compressed.

18. A cartridge for nucleic acid separation and purification comprising a cylindrical body with a first opening and a second opening and having a nucleic acid-adsorptive porous membrane held in the cylindrical body, in which separation and purification of nucleic acid are conducted by passing a sample solution containing nucleic acid by pressurized gas from the first opening to the second opening to allow the nucleic acid to be adsorbed to the nucleic acid-adsorptive porous membrane, wherein:
the cylindrical body comprises: a cylindrical main body having a bottom part supporting the nucleic acid-adsorptive porous membrane; and a discharge part connecting the bottom part opening formed in the bottom part and the second opening; and
a thickness of a part forming the second opening of the discharge part is 0.2 mm or more.

19. The cartridge for nucleic acid separation and purification according to Claim 18, wherein a diameter of the second opening is 1.0 mm or more, and an outer diameter of the part forming the second opening is 1.4 mm or more.

20. The cartridge for nucleic acid separation and purification according to Claim 18, wherein an angle formed by an end face of the discharge part and an outer wall surface of the discharge part is 105° or less.

21. The cartridge for nucleic acid separation and purification according to Claim 18, wherein an end face of the discharge part is in a shape of a funnel with a portion closer to the second opening having a larger opening diameter.

22. The cartridge for nucleic acid separation and purification according to Claim 18, wherein resin hydrophilicity of an end face and an outer wall surface of the discharge part is enhanced.

23. The cartridge for nucleic acid separation and purification according to Claim 18, wherein at least one lug member for guiding bubbles is provided on an end face of the discharge part.
